# EUROPEAN PATENT APPLICATION

(11) **EP 4 568 155 A1**
(43) Date of publication of application: **11.06.2025**
(21) Application number: 23849369.6
(22) Date of filing: 31.07.2023
(51) Int. Cl.: H04L 5/00

(54) **INFORMATION TRANSMISSION METHOD, POSITIONING REFERENCE SIGNAL TRANSMISSION METHOD, APPARATUS, AND DEVICE**

(30) Priority: 03.08.2022 CN 202210930773
(71) Applicant: Vivo Mobile Communication Co., Ltd., Dongguan, Guangdong 523863 (CN)
(72) Inventor: PENG, Shuyan, Dongguan, Guangdong 523863 (CN); WANG, Yuanyuan, Dongguan, Guangdong 523863 (CN); WU, Huaming, Dongguan, Guangdong 523863 (CN)
(74) Representative: Winter, Brandl - Partnerschaft mbB
(86) International application number: PCT/CN2023/110346
(87) International publication number: WO 2024/027662

(57) **Abstract**

This application relates to the field of communication technologies, and discloses an information transmission method, a positioning reference signal transmission method, an apparatus, and a device. The information transmission method in embodiments of this application includes: A first terminal obtains a first target resource pool and/or a first target resource for transmission of a sidelink measurement report SL MR or a physical sidelink shared channel SL PSSCH.

## Description

### CROSS-REFERENCE TO RELATED APPLICATIONS

This application claims priority to Chinese Patent Application No. 202210930773.4, filed with the China National Intellectual Property Administration on August 3, 2022 and entitled "INFORMATION TRANSMISSION METHOD AND APPARATUS, POSITIONING REFERENCE SIGNAL TRANSMISSION METHOD AND APPARATUS, AND DEVICE", which is incorporated herein by reference in its entirety.

### TECHNICAL FIELD

This application relates to the field of communication technologies, and in particular, to an information transmission method and apparatus, a positioning reference signal transmission method and apparatus, and a device.

### BACKGROUND

A new radio (New Radio, NR) system supports sidelink (sidelink, SL) transmission, configured for direct data transmission between user equipments (User Equipment, UE) without using a network device.

SL positioning was introduced in R18, that is, positioning based on the SL. The positioning may be positioning between two UEs, or may be positioning between a UE and a device such as a road side unit (Road Side Unit, RSU). For example, positioning may be performed based on measurement of an SL PRS. In other words, the positioning of the UE is determined through transmission of an SL positioning reference signal (Positioning Reference Signal, PRS) for positioning and transmission of a measurement report. It should be noted herein that a signal for positioning herein may be a newly defined SL PRS or an SL sounding reference signal (Sounding Reference Signal, SRS), or a sidelink synchronization signal block (sidelink Synchronization Signal Block, S-SSB), an SL demodulation reference signal (Demodulation Reference Signal, DMRS), an SL channel state information-reference signal (Channel State Information-Reference Signal, CSI-RS), an SL phase-tracking reference signal (Phase-Tracking Reference Signal, PTRS), or the like, which functions to be only used for SL positioning, and is not limited to the SL PRS.

It may be learned that during the SL positioning, the SL PRS signal is used for positioning, a terminal or a network side device measures the SL PRS to obtain a measurement report, and the terminal or the network side device calculates location information of the terminal based on the measurement report. However, regarding the transmission of the measurement report during the SL positioning, no specific method has not been provided currently.

### SUMMARY

Embodiments of this application provide an information transmission method and apparatus, a positioning reference signal transmission method and apparatus, and a device, to implement transmission of a measurement report during SL positioning.

According to a first aspect, an information transmission method is provided, including:
a first terminal obtains a first target resource pool and/or a first target resource for transmission of a sidelink measurement report SL MR or a physical sidelink shared channel SL PSSCH.

According to a second aspect, a positioning reference signal transmission method is provided, including:
a first terminal obtains a second target resource pool for transmission of a sidelink positioning reference signal SL PRS.

According to a third aspect, an information transmission method is provided, including:
a communication device obtains a first target resource pool and/or a first target resource for transmission of a sidelink measurement report SL MR or a physical sidelink shared channel SL PSSCH.

The communication device configures or indicates the first target resource pool and/or the first target resource to a first terminal.

The communication device is a network side device or a second terminal or a scheduling terminal, and the second terminal is a terminal that transmits or receives information to or from the first terminal.

According to a fourth aspect, a positioning reference signal transmission method is provided, including:
a communication device obtains a second target resource pool for transmission of a sidelink positioning reference signal SL PRS.

The communication device configures or indicates the second target resource pool to a first terminal.

The communication device is a network side device or a second terminal or a scheduling terminal, and the second terminal is a terminal that transmits or receives information to or from the first terminal.

According to a fifth aspect, an information transmission apparatus is provided, including:
a first obtaining module, configured to obtain a first target resource pool and/or a first target resource for transmission of a sidelink measurement report SL MR or a physical sidelink shared channel SL PSSCH.

According to a sixth aspect, a positioning reference signal transmission apparatus is provided, including:
a second obtaining module, configured to obtain a second target resource pool for transmission of a sidelink positioning reference signal SL PRS.

According to a seventh aspect, an information transmission apparatus is provided, including:
a first obtaining module, configured to obtain a first target resource pool and/or a first target resource for transmission of a sidelink measurement report SL MR or a physical sidelink shared channel SL PSSCH; and
a first indication module, configured to configure or indicate the first target resource pool and/or the first target resource to a first terminal.

According to an eighth aspect, a positioning reference signal transmission apparatus is provided, including:
a second obtaining module, configured to obtain a second target resource pool for transmission of a sidelink positioning reference signal SL PRS; and
a second indication module, configured to configure or indicate the second target resource to a first terminal.

According to a ninth aspect, a terminal is provided. The terminal includes a processor and a memory. The memory stores a program or an instruction executable in the processor. The program or the instruction, when executed by the processor, implements the steps of the method according to the first aspect or the second aspect.

According to a tenth aspect, a communication device is provided, including a processor and a memory. The memory stores a program or an instruction executable in the processor. The program or the instruction, when executed by the processor, implements the steps of the method according to the third aspect or the fourth aspect. The communication device is a network side device or a second terminal or a scheduling terminal, and the second terminal is a terminal that transmits or receives information to or from the first terminal.

According to an eleventh aspect, an information transmission system is provided, including a first terminal and a communication device. The first terminal may be configured to perform the steps of the information transmission method according to the foregoing first aspect, and the communication device may be configured to perform the steps of the information transmission method according to the foregoing third aspect.

According to a twelfth aspect, a positioning reference signal transmission system is provided, including a first terminal and a communication device. The first terminal may be configured to perform the steps of the positioning reference signal transmission method according to the foregoing second aspect, and the communication device may be configured to perform the steps of the positioning reference signal transmission method according to the foregoing fourth aspect.

According to a thirteenth aspect, a readable storage medium is provided. The readable storage medium stores a program or an instruction. The program or the instruction, when executed by a processor, implements the steps of the method according to the first aspect or the second aspect or the third aspect or the fourth aspect.

According to a fourteenth aspect, a chip is provided. The chip includes a processor and a communication interface. The communication interface is coupled to the processor. The processor is configured to run a program or an instruction to implement the method according to the first aspect or the second aspect or the third aspect or the fourth aspect.

According to a fifteenth aspect, a computer program/program product is provided. The computer program/program product is stored in a storage medium. The computer program/program product is executed by at least one processor to implement the steps of the method according to the first aspect or the second aspect or the third aspect or the fourth aspect.

According to a sixteenth aspect, an embodiment of this application provides an information transmission apparatus. The apparatus is configured to perform the method according to the first aspect or the third aspect.

According to a seventeenth aspect, an embodiment of this application provides a positioning reference signal transmission apparatus. The apparatus is configured to perform the method according to the second aspect or the fourth aspect.

In embodiments of this application, the first terminal can obtain the first target resource pool and/or the first target resource for transmission of the SL MR or the SL PSSCH, thereby providing a resource basis for the first terminal to transmit or receive the SL MR or the SL PSSCH. In other words, embodiments of this application provide a method for obtaining a first target resource pool and/or a first target resource for transmission of an SL MR or an SL PSSCH, laying a foundation for implementing the transmission of the SL MR or the SL PSSCH. Therefore, embodiments of this application provide a method for implementing transmission of a measurement report during SL positioning.

### BRIEF DESCRIPTION OF THE DRAWINGS

FIG. 1 is a schematic structural diagram of a wireless communication system according to an embodiment of this application;
FIG. 2 is a schematic diagram of an uplink transmission, a downlink transmission, and a sidelink transmission according to an embodiment of this application;
FIG. 3 is a schematic diagram showing that a PSCCH is located within a range of a lowest sub-channel of a PSSCH according to an embodiment of this application;
FIG. 4 is a schematic diagram of a basic process of RTT positioning according to an embodiment of this application;
FIG. 5 is a schematic diagram of an RTT positioning principle according to an embodiment of this application;
FIG. 6 is a schematic diagram of a bilateral RTT positioning principle according to an embodiment of this application;
FIG. 7 is a flowchart of an information transmission method according to an embodiment of this application;
FIG. 8 is a flowchart of another information transmission method according to an embodiment of this application;
FIG. 9 is a schematic diagram of a dedicated SL MR or SL PSSCH resource pool according to Implementation I of this application;
FIG. 10 is a schematic diagram of a resource pool for an SL MR or an SL PSSCH and an SL PRS TDM according to Implementation II of this application;
FIG. 11 is a flowchart of a positioning reference signal transmission method according to an embodiment of this application;
FIG. 12 is a flowchart of another positioning reference signal transmission method according to an embodiment of this application;
FIG. 13 is a structural block diagram of an information transmission apparatus according to an embodiment of this application;
FIG. 14 is a structural block diagram of another information transmission apparatus according to an embodiment of this application;
FIG. 15 is a structural block diagram of a positioning reference signal transmission apparatus according to an embodiment of this application;
FIG. 16 is a structural block diagram of another positioning reference signal transmission apparatus according to an embodiment of this application;
FIG. 17 is a structural block diagram of a communication device according to an embodiment of this application;
FIG. 18 is a structural block diagram of a terminal according to an embodiment of this application;
FIG. 19 is a structural block diagram of a network side device according to an embodiment of this application; and
FIG. 20 is a structural block diagram of another network side device according to an embodiment of this application.

### DETAILED DESCRIPTION

Technical solutions in embodiments of this application are clearly described below with reference to accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in the specification and the claims of this application are used to distinguish between similar objects, and are not used to describe a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "and/or" in the specification and the claims indicates at least one of connected objects, and a character "/" generally indicates an "or" relationship between associated objects.

It should be noted that, the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. Nevertheless, the technologies may also be applied to applications other than applications of the NR system, such as a 6^{th} Generation (6^{th} Generation, 6G) communication system.

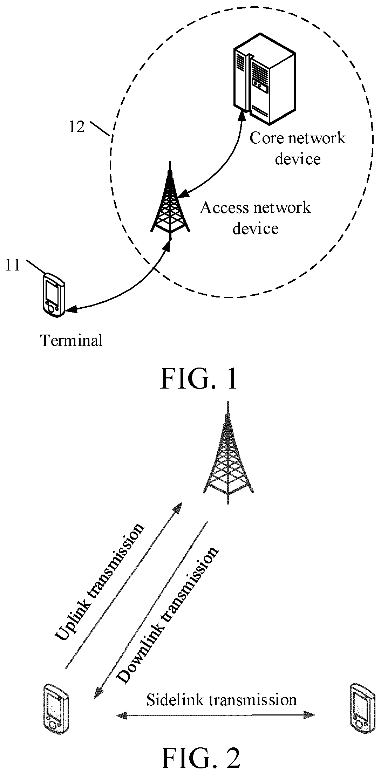

FIG. 1 is a block diagram showing a wireless communication system to which embodiments of this application may be applied. The wireless communication system includes a terminal 11 and a network side device 12. The terminal 11 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile Internet apparatus (Mobile Internet Device, MID), an augmented reality (augmented reality, AR)/virtual reality (virtual reality, VR) device, a robot, a wearable device (Wearable Device), an on-board equipment (VUE), a pedestrian user equipment (PUE), smart home (a home device with a wireless communication capability, such as a refrigerator, a television, a washing machine, or furniture), a game console, a personal computer (personal computer, PC), a teller machine, or a selfservice machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. It should be noted that a specific type of the terminal 11 is not limited in embodiments of this application. The network side device 12 may include an access network device or a core network device. The access network device 12 may also be referred to as a wireless access network device, a radio access network (Radio Access Network, RAN), a wireless access network function, or a wireless access network unit. The access network device 12 may include a base station, a WLAN access point, a Wi-Fi node, and the like, The base station may be referred to as a NodeB, an evolved NodeB (eNB), an access point, a base transceiver station (Base Transceiver Station, BTS), a radio base station, a radio transceiver, a basic service sets (Basic Service Set, BSS), an extended service set (Extended Service Set, ESS), a household NodeB, a household evolved NodeB, a transmitting receiving point (Transmitting Receiving Point, TRP), or some other appropriate term in the field, as long as the same technical effect is achieved. The base station is not limited to a specific technical term. It should be noted that, in embodiments of this application, only a base station in the NR system is used as an example, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example, but the specific type of the core network device is not limited.

To facilitate understanding of the information transmission method and the positioning reference signal transmission method in embodiments of this application, the following related technologies are introduced:

### I. About SL

As shown in FIG. 2, an NR system supports SL transmission, configured for direct data transmission between UEs without using a network device. A 5G NR system supports transmission such as unicast, multicast, or broadcast. In addition, an NR SL includes the following channels:
a physical sidelink control channel (physical sidelink control channel, PSCCH);
a physical sidelink shared channel (physical sidelink shared channel, PSSCH);
a physical sidelink broadcast channel (physical sidelink broadcast channel, PSBCH); and
a physical sidelink feedback channel (physical sidelink feedback channel, PSFCH).

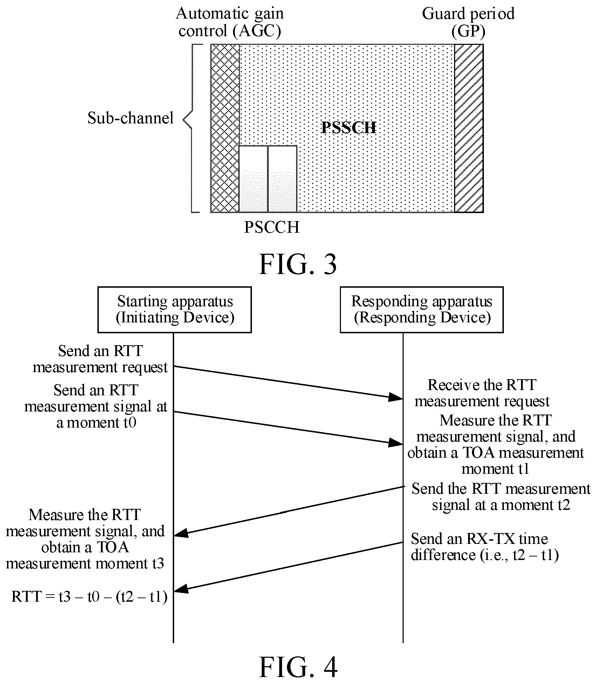

The PSSCH allocates resources in units of sub-channels, and adopts a continuous resource allocation manner in frequency domain. A time domain resource of the PSCCH is a symbol quantity configured by a higher layer, a frequency domain size is a parameter configured by the higher layer, a frequency domain resource of the PSCCH is limited to be less than or equal to a size of one sub-channel, and the PSCCH is located within a range of a lowest sub-channel of the PSSCH (as shown in FIG. 3).

### II. NR SL resource allocation manner

NR V2X defines two resource allocation modes (mode). One is mode1, that is, a base station schedules a resource, and the other is mode2, that is, a UE decides what resources to use for transmission. In this case, the resource information may come from broadcast information of the base station or pre-configured information. If the UE operates within a range of the base station, and a radio resource control (Radio Resource Control, RRC) connection exists between the UE and the base station, the resource allocation mode may be mode1 and/or mode2. If the UE operates within the range of the base station, but no RRC connection exists between the UE and the base station, the resource allocation mode can only be mode2. If the UE is out of the range of the base station, the resource allocation mode can only be mode2. For example, V2X transmission is performed based on the pre-configured information.

For mode 2, a specific operating mode is as follows:
(1) After resource selection is triggered, a TX UE first determines a resource selection window, where a lower boundary of the resource selection window is at T1 time after the resource selection is triggered, and an upper boundary of the resource selection window is at T2 time after the triggering. T2 is a value selected from a packet delay budget (packet delay budget, PDB) transmitted or received by a transport block (Transport Block, TB), and T2 is not earlier than T1.
(2) Before the resource selection, the UE needs to determine a candidate resource set (candidate resource set) for resource selection, and compare the reference signal received power (Reference Signal Received Power, RSRP) measured on a resource in the resource selection window with a corresponding RSRP threshold (threshold). If the RSRP is lower than the RSRP threshold, the resource may be incorporated into the candidate resource set.
(3) After the resource set is determined, the UE randomly selects a transmission resource from the candidate resource set. The UE may further reserve the transmission resource for a next transmission during a current transmission.

The NR V2X supports a chained resource reservation mode, that is, one sidelink control information (sidelink control information, SCI) may reserve a current resource, and at most two additional resources may be reserved. In a next resource, two more reserved resources may be indicated. In other words, in the resource selection window, resources may be continuously reserved in a manner of dynamic reservation.

### III. Round trip time (Round Trip Time, RTT) positioning

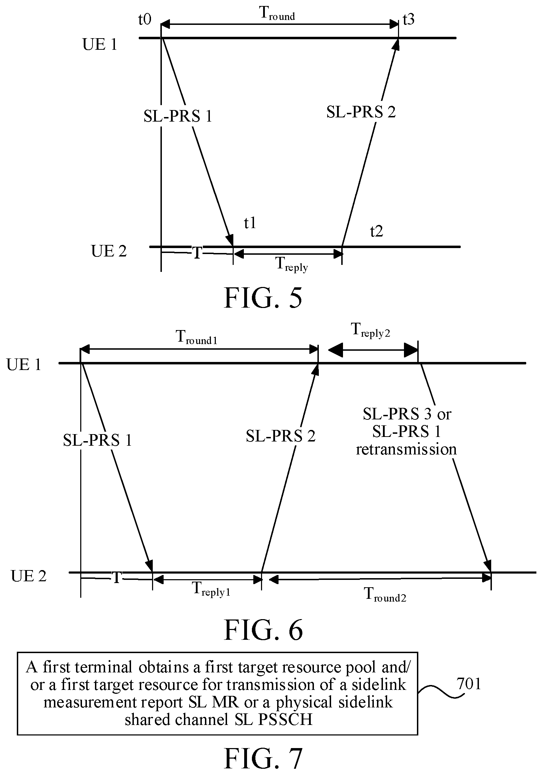

An RTT positioning technology is a positioning technology for ranging. As shown in FIG. 4 and FIG. 5, the RTT positioning process mainly includes the following step 401 to step 406:
Step 401: A starting apparatus (or an initiating apparatus) (Initiating Device) sends an RTT measurement request to a responding apparatus (Responding Device). After receiving an RTT measurement request, the responding device prepares to receive an RTT measurement signal.
Step 402: The initiating device sends the RTT measurement signal to the responding device. The responding device measures the RTT measurement signal and obtains a time of arrival (Time of Arrival, TOA) measurement moment t1.
Step 403: The responding device sends the RTT measurement signal to the initiating device at a moment t2.
Step 404: The responding device sends an RX-TX time difference (that is, t2-t1) to the initiating device. The RX-TX time difference (that is, t2-t1) may also be sent in a load (payload) of the RTT measurement signal at the moment t2.
Step 405: The initiating device measures the RTT measurement signal sent by the responding device, to obtain a TOA measurement moment t3.
Step 406: The initiating device performs calculation to obtain RTT = t3-t0-(t2-t1). If a distance between two devices needs to be estimated, the RTT only needs to be divided by 2 and then multiplied by the speed of light.

An advantage of RTT positioning lies in that no requirement is imposed on absolute synchronization between the initiating device and the responding device. A reason is that t2 and t1 only need to refer to a synchronization source of the responding device, and t3 and t0 only need to refer to a synchronization source of the initiating device.

In addition, during information interaction between two devices, a result obtained by measuring the RTT measurement signal by a device may be considered as a part of a measurement report.

### IV. Double side round trip time (Double side RTT)/multi-RTT (multi-RTT) positioning method

For example, in a multi-RTT process shown in FIG. 6, a UE1 sends an SL PRS1 to a UE2, and the UE2 measures the SL PRS1 to obtain a first measurement report. Then the UE2 sends an SL PRS2 to the UE1, the UE1 sends an SL PRS3 to the UE2, and the UE2 measures the SL PRS3 to obtain a second measurement report. The first measurement report may be sent together with the SL PRS2, or may be sent together with the second measurement report.

In addition, it should be noted that the information transmission method and the positioning reference signal transmission method provided in embodiments of this application may be applied to transmission of the measurement report in the RTT positioning method, or may be applied to transmission of a measurement report and a positioning reference signal in any other positioning method (for example, downlink time difference of arrival (DL Time Difference of Arrival, TDOA) positioning, angle of arrival (Angle of Arrival, AoA) positioning, and angle of departure (Angle of Departure, AoD) positioning). The RTT positioning may include unilateral RTT positioning or multilateral RTT positioning.

The information transmission method and the positioning reference signal transmission method provided in embodiments of this application are described in detail below through some embodiments and application scenarios with reference to the accompanying drawings.

According to a first aspect, as shown in FIG. 7, FIG. 7 is a flowchart of an information transmission method according to an embodiment of this application. The method may include the following step 701:
Step 701: A first terminal obtains a first target resource pool and/or a first target resource for transmission of a sidelink measurement report SL MR or a physical sidelink shared channel SL PSSCH.

The first target resource pool and/or the first target resource may be selected by the first terminal (a specific selection process is to be described later), or may be selected by a second terminal (that is, a terminal that transmits or receives information to or from the first terminal), or may be selected by a scheduling terminal (that is, another terminal other than the second terminal and the first terminal), or may be selected by a network side device.

In addition, the first target resource pool and/or the first target resource may be configured for the first terminal to transmit or receive an SL MR or an SL PSSCH, or may be configured for the second terminal to transmit or receive the SL MR or the SL PSSCH.

In addition, it should be noted that the SL MR may be transmitted or received in the SL PSSCH, where the SL PSSCH carries the SL MR, SL configuration information, SL positioning information, non-SL PRS positioning information, and the like. Therefore, transmission of the SL MR may be considered as transmission of the SL PSSCH. Alternatively, the SL MR may be transmitted or received in a PSCCH or a PSFCH.

It may be understood that the obtaining the first target resource pool and/or the first target resource for transmission of the SL MR or the SL PSSCH is determining the first target resource pool and/or the first target resource for transmission of the SL MR or the SL PSSCH.

It may be learned from the above that in embodiments of this application, the first terminal can obtain the first target resource pool and/or the first target resource for transmission of the SL MR or the SL PSSCH, thereby providing a resource basis for the first terminal to transmit or receive the SL MR or the SL PSSCH. In other words, embodiments of this application provide a method for obtaining a first target resource pool and/or a first target resource for transmission of an SL MR or an SL PSSCH, laying a foundation for implementing the transmission of the SL MR or the SL PSSCH. Therefore, embodiments of this application provide a method for implementing transmission of a measurement report during SL positioning.

Optionally, the method further includes:
The first terminal transmits or receives the SL MR or the SL PSSCH on the first target resource,
   and/or
the first terminal configures or indicates the first target resource to a second terminal, where the second terminal is a terminal that transmits or receives information to or from the first terminal.

"The terminal that transmits or receives information to or from the first terminal" represents a peer UE of the first terminal or a UE scheduled by the first terminal.

To be specific, when the first target resource is configured for the first terminal to transmit or receive the SL MR or the SL PSSCH, the first terminal may transmit or receive the SL MR or the SL PSSCH on the first target resource after obtaining the first target resource. When the first target resource is configured for the second terminal to transmit or receive the SL MR or the SL PSSCH, the first terminal needs to configure or indicate the obtained first target resource to the second terminal after obtaining the first target resource, to cause the second terminal to transmit or receive the SL MR or the SL PSSCH on the first target resource.

Optionally, that the first terminal obtains the first target resource pool for transmission of the SL MR or the SL PSSCH includes:
The first terminal selects, based on first information, the first target resource pool for transmission of the SL MR or the SL PSSCH, where
the first information includes at least one of the following:
   A-1: enable information of the SL MR or the SL PSSCH;
   A-2: sidelink SL positioning enable information;
   A-3: a logical channel ID (logical channel identifier, LCID) of the SL MR or the SL PSSCH;
   A-4: configuration of a PSFCH; and
   A-5: quality of service QoS.

For A-1, the enable information of the SL MR or the SL PSSCH is configured for indicating whether the SL MR or the SL PSSCH is enabled, that is, configured for indicating whether to activate or transmit or receive the SL MR or the SL PSSCH.

For A-2, the SL positioning enable information is configured for indicating whether SL positioning is enabled, that is, configured for indicating whether to activate the SL positioning or indicating whether to perform the SL positioning.

For A-3, the configuration of the PSFCH may include configuring a resource of the PSFCH by RRC in a resource pool. If the resource of the PSFCH is configured, it may be considered that a candidate resource of the SL MR or the SL PSSCH exists, and then a resource of the SL MR or the SL PSSCH may be selected based on time domain and/or frequency domain resource locations configured by the PSFCH. Alternatively, a resource pool of the SL MR or the SL PSSCH may be selected based on the resource pool configured with the resource of the PSFCH.

QoS information may include a priority, a delay budget, power, a channel busy ratio (Channel Busy Ratio, CBR), or the like. When a certain parameter condition is satisfied, the corresponding resource pool or resource is selected to transmit or receive the SL MR or the SL PSSCH.

To be specific, the first terminal may select, based on the at least one of the foregoing A-1 to A-5, the first target resource pool for transmission of the SL MR or the SL PSSCH.

In a case that the first information includes the LCID of the SL MR or the SL PSSCH, the process in which the first terminal selects the first target resource pool based on the LCID of the SL MR or the SL PSSCH may include:
If a logical channel corresponding to the LCID corresponding to the SL MR or the SL PSSCH exists in to-be-transmitted or to-be-received data, the resource pool of the SL MR or the SL PSSCH is selected based on configuration of the resource pool. Specifically, if a dedicated SL MR or SL PSSCH resource pool is configured, the dedicated resource pool is selected to transmit or receive the SL MR or the SL PSSCH. Otherwise, the resource pool not for the SL PRS and/or discovery is selected to transmit or receive the SL MR or the SL PSSCH.

In addition, in a case that the foregoing first information includes the enable information of the SL MR or the SL PSSCH, or the SL positioning enable information, a method for selecting the first target resource pool based on the enable information of the SL MR or the SL PSSCH, or the SL positioning enable information is specifically described as follows.

Optionally, that the first terminal obtains the first target resource pool for transmission of the SL MR or the SL PSSCH includes:
In a case that enable information of the SL MR or the SL PSSCH indicates that the SL MR or the SL PSSCH is enabled, or in a case that SL positioning enable information indicates that SL positioning is enabled, the first terminal performs at least one of the following operations:
B-1: The first terminal selects, as the first target resource pool, a resource pool in resource pools that is configured with an SL MR or SL PSSCH resource.
B-2: The first terminal selects, as the first target resource pool, a resource pool where a sidelink positioning reference signal SL PRS is located.

It may be learned that in a case that the SL MR or the SL PSSCH is enabled, or the SL positioning is enabled, the first terminal may select, as the first target resource pool, the resource pool in the resource pools that is configured with the SL MR or the SL PSSCH resource, or may select, as the first target resource pool, a resource pool where the SL PRS is located.

For B-2, for example, if a plurality of SL PRS resource pools are configured, the first terminal measures the SL MR or the SL PSSCH of the SL PRS in a resource pool (pool) 1, and transmits or receives the SL MR or the SL PSSCH corresponding to the SL PRS in the resource pool (that is, pool1) where the SL PRS is located.

Optionally, that the first terminal obtains the first target resource pool for transmission of the SL MR or the SL PSSCH includes:
In a case that enable information of the SL MR or the SL PSSCH indicates that the SL MR or the SL PSSCH is disabled, or in a case that SL positioning enable information indicates that SL positioning is disabled, the first terminal performs at least one of the following operations:
C-1: The first terminal randomly selects a resource pool as the first target resource pool.
C2: The first terminal selects, as the first target resource pool, a resource pool not configured with the SL MR or the SL PSSCH.
C-3: The first terminal selects, as the first target resource pool, a resource pool not configured with the SL PRS.
C-4: The first terminal selects, as the first target resource pool, a resource pool not configured with an SL discovery.

It may be learned that in a case that the SL MR or the SL PSSCH is not enabled, or the SL positioning is not enabled, the first terminal may randomly select a first target resource pool, or may select a resource pool not configured with the SL MR or the SL PSSCH, a resource pool not configured with the SL PRS, or a resource pool not configured with the SL discovery (discovery) as the first target resource pool.

Optionally, the first target resource pool includes at least one of the following:
D-1: a dedicated SL MR resource pool;
D-2: a dedicated SL PSSCH and physical sidelink control channel SL PSCCH resource pool;
D-3: a dedicated SL PSSCH resource pool;
D-4: a resource pool not for the SL PRS;
D-5: a resource pool except a dedicated SL PRS resource pool;
D-6: a resource pool not for SL discovery; and
D-7: a resource pool except a dedicated SL discovery resource pool.

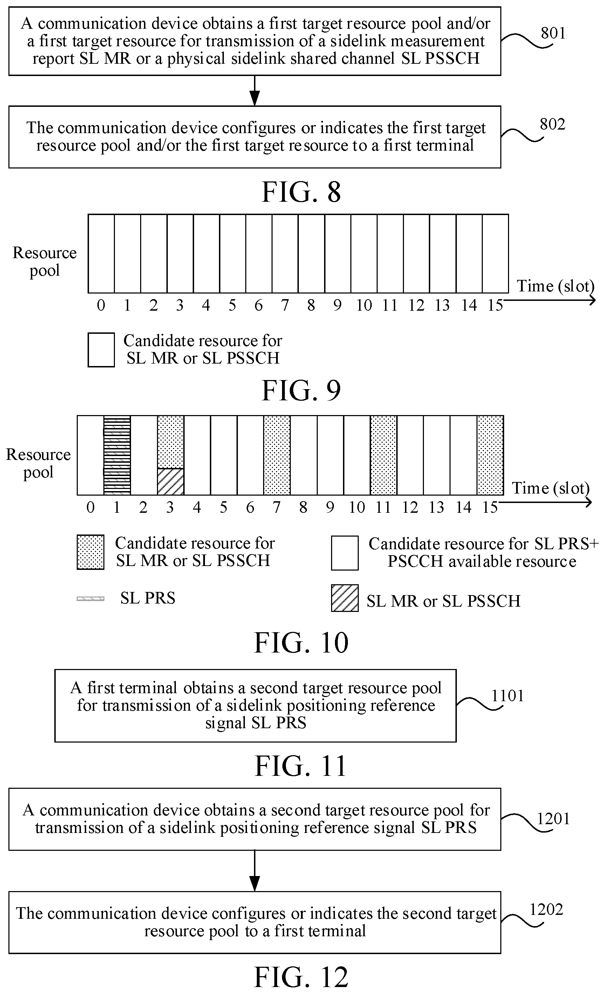

For D-1, the dedicated SL MR resource pool is, for example, shown in FIG. 9.

For D-4, the resource pool not for the SL PRS is a resource pool that is not for transmission of the SL PRS.

For D-5, the resource pool except the dedicated SL PRS resource pool is a resource pool other than the dedicated SL PRS resource pool.

For D-6, the resource pool not for SL discovery is a resource pool that is not for the SL discovery.

For D-7, the resource pool except the dedicated SL discovery resource pool is a resource pool other than the dedicated SL discovery resource pool.

Optionally, the SL MR or SL PSSCH resource in the first target resource pool and an SL PRS resource are subjected to time division multiplexing, or a useable resource for an SL MR or an SL PSSCH in the first target resource pool and a useable resource for an SL PRS are subjected to time division multiplexing.

The SL MR or SL PSSCH resource may refer to a resource that actually transmits or receives the SL MR or the SL PSSCH. The useable resource for the SL MR or the SL PSSCH refers to a resource that can be used for the SL MR or the SL PSSCH, or a resource set from which a resource may be selected for the transmission of the SL MR or the SL PSSCH.

Similarly, the SL PRS resource may refer to a resource that actually transmits or receives the SL PRS, and a useable resource for the SL PRS refers to a resource used for the SL PRS, or a resource set from which the resource may be selected for the transmission of the SL PRS.

That is, the useable resource may also be considered as a candidate resource.

Optionally, the time division multiplexing is slot level time division multiplexing (slot level TDM), or mini-slot level time division multiplexing (mini-slot level TDM), or symbol level time division multiplexing (symbol level TDM), or subframe level time division multiplexing, or millisecond level time division multiplexing.

That is, the SL MR or SL PSSCH resource and the SL PRS resource in the first target resource pool are subjected to slot level TDM (for example, as shown in FIG. 10), or mini-slot level TDM, or symbol level TDM, or subframe level time division multiplexing, or millisecond level time division multiplexing. Alternatively, the useable resource for the SL MR or the SL PSSCH and the useable resource for the SL PRS in the first target resource pool are subjected to slot level TDM, or mini-slot level TDM, or symbol level TDM, or subframe level time division multiplexing, or millisecond level time division multiplexing.

Optionally, that the first terminal obtains the first target resource pool for transmission of the SL MR or the SL PSSCH includes:
The first terminal selects the first target resource pool for transmission of the SL MR or the SL PSSCH in a case that a first condition is satisfied, where
the first condition includes at least one of the following:
   E-1: the first terminal receives SL MR or SL PSSCH request information;
   E-2: the first terminal receives or measures an SL PRS signal;
   E-3: SL MR or SL PSSCH data exists in a cache of the first terminal;
   E-4: the first terminal supports transmission on a plurality of resource pools; and
   E-5: the first terminal supports transmission on a plurality of carrier waves.

The SL MR or SL PSSCH request information in E-1 it may be periodic or semi-persistent or non-periodic.

E-2 represents that when the first terminal receives or measures the SL PRS signal, the transmission of the SL MR or the SL PSSCH may be triggered, that is, selection of the first target resource pool or the first target resource for transmission of the SL MR or the SL PSSCH is triggered. In this case, the first target resource pool or the first target resource that is selected may be used for transmission of an SL MR or an SL PSSCH corresponding to an SL PRS received or measured this time, or may be used for transmission of an SL MR or an SL PSSCH before the SL PRS received or measured this time.

It may be learned from the above that in embodiments of this application, when at least one of E-1 to E-5 is satisfied, the first terminal may select the first target resource pool for transmission of the SL MR or the SL PSSCH.

Optionally, that the first terminal obtains the first target resource for transmission of the SL MR or the SL PSSCH includes at least one of the following:
F-1: The first terminal selects the first target resource for transmission of the SL MR or the SL PSSCH based on an SL PRS resource and a first correspondence, where the first correspondence is a correspondence between the SL PRS and the SL MR or SL PSSCH resource.
F-2: The first terminal selects, as the first target resource, a resource in a different time domain from the SL PRS resource, or a resource that does not overlap with the SL PRS resource.
F-3: The first terminal selects the first target resource for transmission of the SL MR or the SL PSSCH from a second candidate resource set based on a first target intersection or a detection result on a first candidate resource set, where the first target intersection is an intersection of the first candidate resource set and the second candidate resource set.

It may be learned that in embodiments of this application, the process of selecting the first target resource by the first terminal may include at least one of the foregoing F-1 to F-3. F-1 to F-3 are respectively described below.

For F-1, for example, the first terminal may select, from the dedicated SL MR resource pool or the SL PSSCH resource pool or the resource pool not for the SL PRS or the resource pool not for the SL discovery, the foregoing first target resource based on the SL PRS resource and the first correspondence.

Alternatively, for example, the first terminal may select, from the resource pool configured with the SL MR or SL PSSCH resource, the foregoing first target resource based on the SL PRS resource and the first correspondence.

The foregoing first correspondence may be predefined by a protocol, or pre-configured/configured/indicated by a network side device or a second terminal or a scheduling terminal.

Optionally, the first correspondence is related to at least one of the following:
G-1: information about the SL PRS;
G-2: information carried by sidelink control information SCI;
G-3: information about the SL MR;
G-4: an information type of the SL MR or the SL PSSCH; and
G-5: a positioning method.

The first correspondence is a correspondence between the SL PRS and the SL MR or SL PSSCH resource, and the first correspondence is related to at least one of the foregoing G-1 to G-5, representing that specific content of at least one of the foregoing G-1 to G-5 is different, and the corresponding first correspondence is different. For example, the first correspondence is related to the positioning method, representing that when different positioning methods are used, the correspondence between the SL PRS and the SL MR or SL PSSCH resource is different.

Optionally, the information about the SL PRS or the information carried by the SCI or the information about the SL MR includes at least one of the following:
a time domain resource of the SL PRS;
a frequency domain resource of the SL PRS;
a resource location of the SL PRS;
an SL PRS resource element offset;
an SL PRS resource block offset;
an SL PRS index;
an SL PRS sequence;
an SL PRS scrambling identifier;
an SL PRS source identifier;
an SL PRS destination identifier;
an SL MR source identifier; and
an SL MR destination identifier.

When the first correspondence is related to a destination address of the SL MR or the SL PRS, representing that when the destination address of the SL MR or the SL PRS is different, the correspondence between the SL PRS and the SL MR or SL PSSCH resource is different. For example, if one UE sends an SL PRS and a plurality of UEs receive the SL PRS, SL MRs measured by different UEs are mapped to different SL MR resources.

Optionally, the information type of the SL MR or SL PSSCH includes at least one of the following:
a reference signal time difference (Reference signal time difference, RSTD), a relative time of arrival (Relative Time of Arrival, RTOA), an angle of arrival (Angle of Arrival, AoA), an angle of departure AoD (Angle of Departure), a reception-transmission time difference, a reference signal receiving power (Reference Signal Receiving Power, RSRP), reference signal receiving quality (Reference Signal Receiving Quality, RSRQ), and a received signal strength indicator (Received Signal Strength Indicator, RSSI).

The foregoing reception-transmission time difference may be a terminal reception-transmission time difference (UE RX - TX time difference), or may be a base station reception-transmission time difference (gNB RX - TX time difference).

That is, in embodiments of this application, for different feedback types and different sizes of feedback information of the SL MR or the SL PSSCH, different resource mapping manners may be considered.

Optionally, the positioning method includes at least one of the following:
a round trip time RTT positioning method, a multi-round trip time multi-RTT positioning method, a sidelink reference signal time difference SL-RSTD positioning method, a sidelink angle of arrival SL-AoA positioning method, a sidelink angle of departure SL-AoD positioning method, and a sidelink relative time of arrival SL-RTOA positioning method.

For multi-RTT, a UE may feed back a measurement result (that is, an SL MR or an SL PSSCH) of an SL PRS at a time, or may feed back measurement results of a plurality of SL PRSs. An amount of data fed back may make a difference.

Optionally, a corresponding interval between the SL PRS and the SL MR or the SL PSSCH in the first correspondence satisfies at least one of the following:
greater than or not less than a first interval; and
less than or not greater than a second interval, where
the first interval and/or the second interval is a parameter value predefined or pre-configured or configured or indicated by a protocol.

In addition, the foregoing first time interval may be determined based on a processing time of the SL PRS and/or a preparation time of the SL MR or the SL PSSCH, and the second time interval may be determined based on effectiveness of the SL MR or the SL PSSCH or based on a delay budget of the SL MR or the SL PSSCH.

For F-2, the first terminal selects, as the first target resource, the resource in the different time domain from the SL PRS resource, or selects the resource that does not overlap with the SL PRS resource. That is, the first target resource selected by the first terminal and the SL PRS resource are in different time domain resource units, or the first target resource selected by the first terminal does not overlap with the SL PRS resource. The time domain resource unit may be for example one or more slots, mini-slots, symbols, milliseconds, seconds, or the like.

For F-3, the first terminal may select, based on a detection result on a first target intersection of a first candidate resource set and a second candidate resource set, a first target resource from the second candidate resource set, or may select a first target resource based on a detection result on the first candidate resource set.

The detection result may include at least one of a detection result of the SCI, an RSRP measurement result, and an RSSI measurement result.

Optionally, the first candidate resource set includes at least one of the following:
a resource configured or indicated as the SL MR or the SL PSSCH;
a resource not configured or indicated as the SL PRS;
a resource not configured or indicated as an SL discovery;
a resource in the first target resource pool that is greater than or not less than n-T0, where n-T0 represents a time value;
one or more resources; and
one or more resource sets.

T0 is a value predefined or pre-configured or configured or indicated, and/or T0 is a logical time unit or a physical time unit. For example, the time unit may be a slot, a mini-slot, a symbol, a millisecond, or a second. n represents a moment the first terminal selects the first target resource. The logical time unit is defined by a time number in a resource pool or in a bandwidth part (Bandwidth Part, BWP), and the physical time unit is defined by time numbers inside and outside the resource pool or time numbers inside and outside the BWP. If the time numbers are continuous logical time numbers, the time numbers may represent a continuous or discontinuous physical time in terms of physical time.

In addition, the first candidate resource set includes a time domain resource or a time-frequency domain resource.

Moreover, in embodiments of this application, resources in a resource set may be continuous or discontinuous.

Optionally, the second candidate resource set includes at least one of the following:
a candidate resource set for the SL MR or the SL PSSCH;
a candidate resource set for a non-SL PRS;
a candidate resource set for SL positioning; and
a set of resources that satisfy a packet delay budget PDB.

That is, the second candidate resource set satisfies a fourth condition, and the fourth condition includes at least one of the following:
a resource in the candidate resource set for the SL MR or the SL PSSCH;
a resource in the candidate resource set for the non-SL PRS;
a resource in the candidate resource set for SL positioning; and
a resource that satisfies the packet delay budget PDB.

The candidate resource set for the SL is a candidate resource set including the resource of the SL PRS. In addition, for the candidate resource set for SL positioning, it is considered that some resource units may be used for the SL PSSCH or the SL PRS. In this case, the resource units may be regarded as flexible resource units (for example: flexible slots (flexible slot)), rather than semi-persistently limited resources.

Optionally, that the first terminal selects the first target resource for transmission of the SL MR or the SL PSSCH from the second candidate resource set based on the first target intersection or the detection result on the first candidate resource set includes:
The first terminal excludes a second resource in the second candidate resource set based on the first target intersection or the detection result on the first candidate resource set, to obtain a third candidate resource set.

The first terminal selects the first target resource for transmission of the SL MR or the SL PSSCH based on the third candidate resource set.

In other words, the first terminal may exclude a part of resources in the second candidate resource set based on at least one of the detection result of the SCI, the RSRP measurement result, and the RSSI measurement result on the first target intersection, to obtain a third candidate resource set, thereby selecting the first target resource based on the third candidate resource set, or may exclude a part of resources in the second candidate resource set based on at least one of the detection result of the SCI, the RSRP measurement result, and the RSSI measurement result on the first candidate resource set, to obtain a third candidate resource set, thereby selecting the first target resource based on the third candidate resource set.

Optionally, the second resource is a resource that satisfies a second condition, and the second condition includes at least one of the following:
H-1: a resource of the SL MR indicated or reserved for SCI;
H-2: a resource of the SL PSSCH indicated or reserved for the SCI;
H-3: a resource of the SL PRS indicated or reserved for the SCI;
H-4: an RSRP being greater than a first threshold; and
H-5: an RSSI being greater than a second threshold.

The first threshold and/or the second threshold is a value predefined or pre-configured or configured or indicated.

In addition, resources (including the resource of the SL MR or the SL PSSCH and/or the resource of the SL PRS) indicated or reserved by the SCI have corresponding uses. Therefore, the resources indicated or reserved by the SCI in the second candidate resource set need to be excluded.

In addition, the RSRP is greater than the first threshold, representing that to-be-transmitted or to-be-received data on a resource occupied by another terminal may be greater than the first threshold. If the terminal that needs to transmit or receive the SL MR or the SL PSSCH still performs transmission on the occupied resource, data of the another terminal causes certain interference to data transmission of the terminal. Therefore, when an RSRP of a certain part of resources in the second candidate resource set is greater than the first threshold, it indicates that the resource is not available for data transmission of the terminal (that is, a terminal that needs to transmit or receive the SL MR or the SL PSSCH), or it is considered that the resource is used for the data transmission of the terminal (that is, the terminal that needs to transmit or receive the SL MR or the SL PSSCH) at a low priority. Therefore, the resource whose RSRP is greater than the first threshold in the second candidate resource set may be excluded.

Similarly, the RSSI is greater than the second threshold, representing that energy on the resource is greater than the second threshold. If the terminal that needs to transmit or receive the SL MR or the SL PSSCH performs transmission on the resource, the energy on the resource interferes with data transmission of the terminal, resulting in poor transmission performance of the terminal on the resource. Therefore, when the RSSI of a certain part of resources in the second candidate resource set is greater than the second threshold, it indicates that the resource is not available for data transmission of the terminal (that is, a terminal that needs to transmit or receive the SL MR or the SL PSSCH), or it is considered that the resource is used for the data transmission of the terminal (the terminal that needs to transmit or receive the SL MR or the SL PSSCH) at a low priority. Therefore, the resource whose RSSI is greater than the second threshold in the second candidate resource set may be excluded.

Optionally, that the first terminal selects the first target resource for transmission of the SL MR or the SL PSSCH based on the third candidate resource set includes at least one of the following:
The first terminal selects, as the first target resource by the first terminal, a resource that satisfies a third condition from the third candidate resource set.

The first terminal selects, based on the third candidate resource set and/or the second candidate resource set, a resource set reported to a higher layer.

The higher layer of the first terminal selects the first target resource based on the third candidate resource set and/or the second candidate resource set.

It may be learned that a specific manner in which the first terminal selects the first target resource based on the third candidate resource set may be Manner I or Manner II as follows:
Manner I: The first terminal directly selects, as the first target resource, a resource that satisfies a third condition from the third candidate resource set.

Optionally, the third condition includes at least one of the following:
a resource in a candidate resource set for SL positioning;
a resource in a candidate resource set for the SL MR or the SL PSSCH;
a resource in a candidate resource set for a non-SL PRS;
a resource for the non-SL PRS;
a resource in a candidate resource set for a non-SL discovery; and
a resource for the non-SL discovery.

Manner II: The first terminal selects, based on the third candidate resource set and/or the second candidate resource set, a resource set reported to a higher layer, so that the higher layer selects the first target resource based on the resource set reported by the first terminal.

The higher layer described herein may be a media access control (Media Access Control, MAC) layer or a radio resource control (Radio Resource Control, RRC) layer or an SL LTE positioning protocol (LTE positioning protocol, LPP).

In addition, optionally, that the first terminal selects, based on the third candidate resource set and/or the second candidate resource set, the resource set reported to the higher layer includes at least one of the following I-1 to I-5:
I-1: The first terminal randomly selects a resource set reported to the higher layer from the third candidate resource set and/or the second candidate resource set.

That is, the first terminal may select a part of resources from the third candidate resource set and report the part of resources to the higher layer. In this case, the higher layer selects a first target resource based on the part of resources selected by the first terminal from the third candidate resource set.

Alternatively, the first terminal may also report the third candidate resource set to the higher layer. In this case, the higher layer selects a first target resource based on the third candidate resource set.

Alternatively, the first terminal may select a part of resources from the second candidate resource set and report the part of resources to the higher layer. In this case, the higher layer selects a first target resource based on the part of resources selected by the first terminal from the second candidate resource set.

Alternatively, the first terminal may also report the second candidate resource set to the higher layer. In this case, the higher layer selects a first target resource based on the second candidate resource set.

Alternatively, the first terminal may select a part of resources respectively from the second candidate resource set and the third candidate resource set and report the part of resources to the higher layer. In this case, the higher layer selects a first target resource based on the part of resources selected by the first terminal respectively from the second candidate resource set and the third candidate resource set.

Alternatively, the first terminal may also report the second candidate resource set and the third candidate resource set to the higher layer. In this case, the higher layer selects a first target resource based on the second candidate resource set and the third candidate resource set.

I-2: The first terminal selects a second target intersection as the resource set reported to the higher layer, where the second target intersection is an intersection of the third candidate resource set and the second candidate resource set.

That is, the first terminal may report the second target intersection of the second candidate resource set and the third candidate resource set to the higher layer, so that the higher layer selects a first target resource based on the second target intersection.

1-3: The first terminal selects the resource set reported to the higher layer from the second target intersection and the third candidate resource set.

Further, optionally, the first terminal selects, as the resource set reported to the higher layer, a resource in the second target intersection and a resource set formed by at least part of resources in the third candidate resource set other than the second target intersection. That is, the first terminal reports the second target intersection and the at least part of resources in the third candidate resource set other than the second target intersection to the higher layer.

I-4: The first terminal selects the resource set reported to the higher layer from the second target intersection and the second candidate resource set.

Further, optionally, the first terminal selects, as the resource set reported to the higher layer, a resource in the second target intersection and a resource set formed by at least part of resources in the second candidate resource set other than the second target intersection. That is, the first terminal reports the second target intersection and the at least part of resources in the second candidate resource set other than the second target intersection to the higher layer.

I-5: The first terminal selects the resource set reported to the higher layer from the second target intersection, the third candidate resource set, and/or the second candidate resource set in a case that a quantity of resources in the second target intersection is less than a quantity of the first target resources.

Further, optionally, in a case that the quantity of resources in the second target intersection is less than the quantity of the first target resources, the first terminal selects, as the resource set reported to the higher layer, the resource in the second target intersection and the resource set formed by at least part of resources in the second candidate resource set and/or the third resource set other than the second target intersection. That is, in a case that the quantity of resources in the second target intersection is less than the quantity of the first target resources (that is, in a case that the quantity of resources in the second target intersection is less than a quantity of to-be-selected resources), the first terminal may report, to the higher layer, the second target set and the at least part of resources in the second candidate resource set other than the second target intersection and/or the at least part of resources in the third candidate resource set other than the second target intersection.

It may be learned from the above that the resource set received by the higher layer may be the second candidate resource set, or may be the third candidate resource set, or may be the second candidate resource set and the third candidate resource set. In these cases, the higher layer selects the first target resource based on the third candidate resource set and/or the second candidate resource set. A method for selecting the first target resource by the higher layer based on the third candidate resource set and/or the second candidate resource set is specifically described below:
Optionally, that the higher layer of the first terminal selects, based on the third candidate resource set and/or the second candidate resource set, the first target resource for transmission of the SL MR or the SL PSSCH includes at least one of the following J-1 to J-5:
J-1: A higher layer of the first terminal randomly selects the first target resource from the third candidate resource set and/or the second candidate resource set.

That is, the higher layer randomly selects the first target resource from the third candidate resource set, or randomly selects the first target resource from the second candidate resource set, or selects a resource from each of the third candidate resource set and the second candidate resource set as the first target resource.

J-2: The higher layer of the first terminal selects the first target resource from the second target intersection in a case that a quantity of resources in the second target intersection is greater than or equal to a quantity of the first target resources.

The quantity of resources in the second target intersection is greater than or equal to the quantity of the first target resources, representing that the resources in the second target intersection are sufficient for selection of the first target resource. Therefore, in this case, the first target resources may be directly selected from the second target intersection.

J-3: The first terminal selects the first target resource from the second target intersection and the third candidate resource set.

Further, optionally, the first terminal selects resources in the second target intersection and at least part of resources in the third candidate resource set other than the second target intersection as the first target resources.

J-4: The first terminal selects the first target resource from the second target intersection and the second candidate resource set.

Further, optionally, the first terminal selects resources in the second target intersection and at least part of resources in the second candidate resource set other than the second target intersection as the first target resources.

J-5: The higher layer of the first terminal selects the first target resources from the second target intersection, the third candidate resource set, and/or the second candidate resource set in a case that the quantity of resources in the second target intersection is less than the quantity of the first target resources.

Further, optionally, in a case that the quantity of resources in the second target intersection is less than the quantity of the first target resources, the first terminal selects, as the first target resources, the resources in the second target intersection and the at least part of resources in the second candidate resource set and/or the third resource set other than the second target intersection.

The quantity of resources in the second target intersection is less than the quantity of the first target resources, representing that the resources in the second target intersection are insufficient for selection of the first target resource. Therefore, in this case, the resources in the second target intersection may be used as parts of the first target resource, and the rest of the first target resources may be selected from the second candidate resource set and/or the third candidate resource set.

Optionally, that the first terminal obtains the first target resource for transmission of the SL MR or the SL PSSCH includes:
The first terminal transmits or receives a scheduling request SR and/or a buffer status report BSR to obtain the first target resource, where
the scheduling request and/or the buffer status report are configured to request to transmit or receive SL MR or SL PSSCH or SL positioning information or non-SL PRS positioning information.

That is, the first terminal may obtain the first target resource by transmitting or receiving the SR and/or the BSR. That is, the first terminal may send the SR and/or the BSR to a network side device or a second terminal or a scheduling terminal to request the first target resource.

That is, the information transmission method in embodiments of this application may be applied to an architecture in which an LMF provides a location service, or may be applied to an architecture in which a UE provides a location service.

For example, an RX UE (that is, a PRS receiving UE or an SL MR sending UE) sends the SR to a base station to request a reporting resource of the SL MR. The RX UE transmits an MR to a TX UE on the resource.

Alternatively, the TX UE sends the SR to the base station to request the reporting resource of the SL MR. The TX UE configures/indicates a transmission resource of an RX UE SL MR. The RX UE transmits the SL MR to the TX UE on the resource.

Alternatively, the RX UE sends the SR to the base station to request the reporting resource of the SL MR. The RX UE transmits the SL MR to a gNB or a location management function (Location Management Function, LMF) on the resource.

Alternatively, the TX UE sends the SR to the base station to request the reporting resource of the SL MR. The TX UE configures/indicates a transmission resource of an RX UE SL MR. The RX UE transmits the SL MR to the gNB/LMF on the resource.

Alternatively, the RX UE sends the SR (for example, SL SR) to a scheduling (scheduling) UE to request the reporting resource of the SL MR. The scheduling UE configures/indicates a resource of an RX UE MR. The RX UE transmits the SL MR to the TX UE or the scheduling UE on the resource. The scheduling UE may provide a UE in an architecture of an entity for a location server (that is, LMF).

Alternatively, the TX UE sends the SR (for example, SL SR) to the scheduling UE to request the reporting resource of the SL MR. The scheduling UE configures/indicates a resource of a TX UE SL MR, and the TX UE configures/indicates the transmission resource of the RX UE SL MR. The RX UE transmits the SL MR to the TX UE/scheduling UE on the resource. The scheduling UE may provide a UE in an architecture of an entity for a location server (that is, LMF).

Optionally, a priority of the foregoing SR is the same as a priority of the SL MR or the SL PSSCH.

Optionally, in a case that a fourth condition is satisfied, the transmission of the SR is canceled, where
the fourth condition includes at least one of the following:
transmission of the SL MR or the SL PSSCH is canceled; and
a delay requirement for the SL MR or the SL PSSCH is not satisfied.

Optionally, the transmission of the SL MR or the SL PSSCH is mapped to configuration of one or more SRs, where
the configuration of each SR corresponds to at least one of a load, a priority, a delay, and a report information type of one SL MR or SL PSSCH.

In addition, the configuration of the SR is a configuration corresponding to one or more PC5-RRC connections, which may be for example SR configurations corresponding to all PC5-RRC connections.

For example: different SR resources correspond to different SL MR loads (payload). If a UE transmits or receives the SR by using a certain resource, a size of a to-be-transmitted or to-be-received SL MR may be determined.

For example: different SR resources correspond to different types of reporting information of the SL MR. The information type may include at least one of an RSTD, an RTOA, an AoA, an AoD, a reception-transmission time difference (for example, UE RX-TX time difference), an RSRP, an RSRQ, and an RSSI.

Optionally, the BSR carries load information related to the transmission of the SL MR or the SL PSSCH.

Optionally, the first target resource is a periodic or semi-persistent or non-periodic resource.

That is, the SL MR or the SL PSSCH may be periodically, semi-periodically, or non-periodically transmitted or received.

Optionally, a period value or a starting time of the periodic resource is a value configured by radio resource control RRC signaling.

That is, if the SL MR or the SL PSSCH may be periodically transmitted or received, a period value or a starting time of the transmission may be a value configured by RRC signaling.

Optionally, the period value of the semi-persistent resource is a value configured or indicated by a network side device or a predefined terminal or a second terminal, and the second terminal is a terminal that transmits or receives information to or from the first terminal;
and/or
activation or deactivation signaling of the semi-persistent resource is one of media access control control element MAC CE, downlink control information DCI, and SCI.

That is, if the SL MR or the SL PSSCH may be semi-persistently transmitted or received, a period value of the semi-persistent transmission may be a value configured or indicated by a network side device or a predefined terminal or a second terminal. For example, the period value of the semi-persistent transmission may be a value configured or indicated in one of an LPP, RRC, a MAC CE, and DCI sent by a network device. Alternatively, for example, the period value of the semi-persistent transmission is a value configured or indicated in one of PC5-RRC, a MAC CE, and SCI sent by the scheduling terminal or the second terminal.

If the SL MR or the SL PSSCH may be semi-persistently transmitted or received, activation signaling or deactivation signaling of the semi-persistent transmission may be one of the MAC CE, the DCI, and the SCI. For example, if a network device activates a periodic resource through the MAC CE, a semi-persistently configured first target resource takes effect after X resource units after a UE feedback moment (for example, in a first resource unit after X resource units).

Optionally, that the first terminal transmits or receives the SL MR or the SL PSSCH on the first target resource includes:
The first terminal transmits or receives the SL MR or the SL PSSCH on the first target resource and on the SCI or the MAC CE or PC5-RRC,
   and/or
the first terminal transmits or receives the SL MR or the SL PSSCH on the first target resource and on uplink control information UCI or the MAC CE or RRC or a long term evolution positioning protocol LPP.

It may be understood that in the method for selecting the first target resource pool for transmission of the SL MR or the SL PSSCH by the first terminal, the existing process of selecting SL PSSCH resources may be reused, or the foregoing method of "selecting the first target resource pool for transmission of the SL MR or the SL PSSCH based on the first information" may be adopted.

Similarly, in the method for selecting the first target resource for transmission of the SL MR or the SL PSSCH by the first terminal, the existing process of resource selection may be reused (for example, the SL resource selection process of Section 8 in the protocol 38.214), or the foregoing methods described in "F-1 or F-2 or F-3" may be adopted.

When the foregoing method of "selecting, based on the first information, the first target resource pool for transmission of the SL MR or the SL PSSCH" is adopted as the method for selecting the first target resource pool for transmission of the SL MR or the SL PSSCH by the first terminal, the first terminal selects, from the first target resource pool, the first target resource for transmission of the SL MR or the SL PSSCH.

According to a second aspect, as shown in FIG. 8, FIG. 8 is a flowchart of an information transmission method according to an embodiment of this application. The method may include the following steps 801 to 802:

Step 801: A communication device obtains a first target resource pool and/or a first target resource for transmission of a sidelink measurement report SL MR or a physical sidelink shared channel SL PSSCH.

Step 802: The communication device configures or indicates the first target resource pool and/or the first target resource to a first terminal.

The communication device is a network side device or a second terminal or a scheduling terminal, and the second terminal is a terminal that transmits or receives information to or from the first terminal.

It may be learned that the first target resource pool and/or the first target resource may be selected by a second terminal (that is, a terminal that transmits or receives information to or from the first terminal), or may be selected by a scheduling terminal (that is, another terminal other than the second terminal and the first terminal), or may be selected by a network side device.

The first target resource pool and/or the first target resource may be configured for the first terminal to transmit or receive an SL MR or an SL PSSCH, or may be configured for the second terminal to transmit or receive the SL MR or the SL PSSCH.

In addition, it should be noted that the SL MR may be transmitted or received in the SL PSSCH, where the SL PSSCH carries the SL MR, SL configuration information, SL positioning information, non-SL PRS positioning information, and the like. Therefore, transmission of the SL MR may be considered as transmission of the SL PSSCH. Alternatively, the SL MR may be transmitted or received in a PSCCH or a PSFCH.

Optionally, a method for obtaining the first target resource pool and/or the first target resource for transmission of the SL MR or the SL PSSCH by the communication device may be the same as the method for selecting the first target resource pool and/or the first target resource by the first terminal described in the foregoing first aspect. Reference may be made to the foregoing descriptions, and details are not described herein again.

Based on the above, a specific implementation of the transmission method of the sidelink measurement report in embodiments of this application may be as described in the following Implementation I or Implementation II:

### Implementation I:

Case I: A network side device or a first terminal or a second terminal or a scheduling terminal pre-configures/configures a first target resource of an SL MR or an SL PSSCH for the first terminal. The second terminal is a terminal that transmits or receives information to or from the first terminal.

Optionally, the first target resource may be selected based on a first correspondence between an SL PRS and an SL MR or SL PSSCH resource.

For example, the first target resource may be selected based on information about the SL PRS or information carried by SCI and the foregoing first correspondence. The information about the SL PRS or the information carried by the SCI includes at least one of the following: an SL PRS time domain resource, an SL PRS frequency domain resource, an SL PRS resource element (Resource Element, RE) offset (offset), an SL PRS resource block (Resource Block, RB) offset, an SL PRS index (index), a source (source) ID of the SL PRS, and a destination (destination) ID.

Alternatively, for example, the first target resource may be selected based on a resource location of the SL PRS and the foregoing first correspondence.

### Case II:

A network side device or a second terminal or a scheduling terminal pre-configures/configures a first target resource pool of an SL MR or an SL PSSCH for a first terminal.

Optionally, the first target resource pool may be selected based on a logical channel ID (logical channel identifier, LCID) of the SL MR or the SL PSSCH.

If a MAC layer has chosen to create an SL authorization corresponding to transmission of one or more MAC protocol data units (Protocol data unit, PDU), SL data in a logical channel is available, where if the SL data is a logical channel for transmission of an MR, the processing manners in the following first case and second case are as follows:
First case: If a dedicated MR resource pool is configured, the dedicated MR resource pool is selected for transmission (that is, the dedicated MR resource pool is a first target resource pool).
Second case: Otherwise (that is, the dedicated MR resource pool is not configured), a resource pool not for transmission of an SL PRS and/or a resource pool for discovery is selected to transmit or receive the SL MR or the SL PSSCH.

Optionally, the MR data is the same as ordinary SL data, and data transmission is performed based on a resource pool selected by the LCID.

Optionally, the LCID of the SL MR is predefined/pre-configured/configured.

Configuration of the LCID is shown in Table 1:

**Table 1 Configuration of LCID**

| Index (Index) | Values (values) of LCID |
|---|---|
| 0 | Shared control channel carrying PC5-S messages that are not protected (SCCH carrying PC5-S messages that are not protected) |
| 1 | Shared control channel carrying PC5-S messages "direct security mode command" and "direct security mode complete" (SCCH carrying PC5-S messages "Direct Security Mode Command" and "Direct Security Mode Complete") |
| 2 | Shared control channel carrying other PC5-S messages that are protected (SCCH carrying other PC5-S messages that are protected) |
| 3 | Shared control channel carrying PC5-RRC messages (SCCH carrying PC5-RRC messages) |
| 4-19 | Logical channel ID (Identity of the logical channel) |
| 20-58 | Reserved (Reserved) |
| 59 | Sidelink inter-UE coordination request (Sidelink Inter-UE Coordination Request) |
| 60 | Sidelink inter-UE coordination information (Sidelink Inter-UE Coordination Information) |
| 61 | Sidelink discontinuous reception command (Sidelink DRX Command) |
| 62 | Sidelink channel state information reporting (Sidelink CSI Reporting) |
| 63 | Padding (Padding) |
| X | Sidelink measurement report (Sidelink Measurement Report) |

X represents an identifier of the SL MR or the SL PSSCH. X is a value different from other indexes in the table.

### Implementation II:

Case I: A network side device or a first terminal or a second terminal or a scheduling terminal pre-configures/configures a periodic second candidate resource set of an SL MR or an SL PSSCH for the first terminal, where a period is N (for example, N may be 1, 2, 4, 8, 16, or 32 slot(s) or millisecond(s) (slot/ms)).

Optionally, the first target resource may be selected from the second candidate resource set based on a first correspondence between an SL PRS and an SL MR or SL PSSCH resource.

For example, the first target resource may be selected from the second candidate resource set based on information about the SL PRS or information carried by SCI and the foregoing first correspondence. The information about the SL PRS or the information carried by the SCI includes at least one of the following: an SL PRS time domain resource, an SL PRS frequency domain resource, an SL PRS RE offset, an SL PRS RB offset, an SL PRS index, and a source ID and a destination ID of the SL PRS.

Alternatively, for example, the first target resource may be selected from the second candidate resource set based on a location of the SL PRS and the foregoing first correspondence.

Case II: A UE may monitor SCI and/or measure at least one of an RSRP, RSRQ, and RSSI, so as to select the first target resource from the second candidate resource set based on a detection result (that is, at least one of the monitored SCI, the measured RSRP, the measured RSRQ, and the measured RSSI).

For example, the second candidate resource set may include a candidate resource of the SL MR or the SL PSSCH and a candidate resource of the SLPRS, or the second candidate resource set may also include the candidate resource of the SL MR or the SL PSSCH.

For example, if the first terminal selects the first target resource for the SL MR or the SL PSSCH in slot n, the first terminal may select the first target resource by using the process described in the following Manner I or Manner II.

Manner I: The first terminal monitors SCI and/or measures at least one of an RSRP, RSRQ, and RSSI in an intersection of a range of slot [n-T0, n-X] and the first candidate resource set, to obtain a detection result, thereby performing the following process based on the detection result:
The first terminal excludes a second resource in a second candidate resource set based on the detection result, to obtain a third candidate resource set, where the second resource is a resource that satisfies a second condition, and the second condition includes at least one of the following: a resource of the SL MR indicated or reserved for SCI, a resource of the SL PSSCH indicated or reserved for the SCI, a resource of the SL PRS indicated or reserved for the SCI, the RSRP being greater than a first threshold, and the RSSI being greater than a second threshold.

The first terminal selects a resource set from the third candidate resource set and reports the resource set to a higher layer.

The higher layer (for example, a MAC layer) of the first terminal selects a first target resource from the reported resource set.

Manner II: The first terminal monitors the SCI and/or measures at least one of the RSRP, the RSRQ, and the RSSI within the range of slot [n-T0, n-X], to obtain a detection result, thereby performing the following process based on the detection result:
The first terminal excludes a second resource in a second candidate resource set based on the detection result, to obtain a third candidate resource set, where the second resource is a resource that satisfies a second condition, and the second condition includes at least one of the following: a resource of the SL MR indicated or reserved for SCI, a resource of the SL PSSCH indicated or reserved for the SCI, a resource of the SL PRS indicated or reserved for the SCI, the RSRP being greater than a first threshold, and the RSSI being greater than a second threshold.

The first terminal selects, based on the third candidate resource set and/or the second candidate resource set, a resource set reported to a higher layer.

The higher layer of the first terminal selects a first target resource from the reported resource set.

The higher layer (for example, the MAC layer) of the first terminal selects a first target resource from the reported resource set.

The resource set selected by the first terminal to be reported to the higher layer satisfies at least one of the following (1) to (4):
(1) The resource set includes resources in an intersection of the third candidate resource set and the second candidate resource set;
(2) The resource set includes a second target intersection of the third candidate resource set and the second candidate resource set, where if a quantity of resources in the second target intersection is less than a quantity of preset resources (that is, a quantity of first target resources to be selected), the first target resource is selected from the resources in the second candidate resource set other than the second target intersection and the foregoing second resource. The first target resource selected herein may be a resource selected based on measurement of the RSRP/RSRQ/RSSI.
(3) The resource set includes a second target intersection of the third candidate resource set and the second candidate resource set, where if the quantity of resources in the second target intersection is less than the quantity of preset resources, the first target resource is selected from the resources in the third candidate resource set other than the second target intersection. The first target resource selected herein may be a resource selected based on measurement of the RSRP/RSRQ/RSSI.
(4) The resource set includes resources selected from the third candidate resource set and the second candidate resource set, where if the quantity of resources in the second target intersection of the third candidate resource set and the second candidate resource set is less than the quantity of preset resources, a resource set is randomly selected from the third candidate resource set and the second candidate resource set and then reported, or a resource set is selected and reported based on measurement of the RSRP/RSRQ/RSSI.

In addition, resource selection of the higher layer satisfies at least one of the following (1) to (4):
(1) The first target resource is selected from the second target intersection of the third candidate resource set and the second candidate resource set.
(2) If the quantity of resources in the second target intersection is less than the quantity of preset resources (that is, a quantity of first target resources to be selected), a resource in the second target intersection is selected, and a resource is selected from the second candidate resource set.
(3) If the quantity of resources in the second target intersection is less than the number of the preset resources, a resource in the second target intersection is selected, and a resource is selected from the third candidate resource set.
(4) If the quantity of resources in the second target intersection is less than the quantity of preset resources, resources may be randomly selected from the third candidate resource set and the second candidate resource set, or the resources may be selected based on measurement of the RSRP/RSRQ/RSSI.

According to a third aspect, as shown in FIG. 11, FIG. 11 is a flowchart of a positioning reference signal transmission method according to an embodiment of this application. The method may include the following step 1101:
Step 1101: A first terminal obtains a second target resource pool for transmission of a sidelink positioning reference signal SL PRS.

The second target resource pool may be selected by the first terminal, or may be selected by a second terminal (that is, a terminal that transmits or receives information to or from the first terminal), or may be selected by a scheduling terminal (that is, another terminal other than the second terminal and the first terminal), or may be selected by a network side device.

In addition, during the SL positioning, the SL PRS signal is used for positioning, a terminal or a network side device measures the SL PRS to obtain a measurement report, and the terminal or the network side device calculates location information of the terminal based on the measurement report. However, no specific method for selecting a resource pool for transmission of an SL PRS is provided at present.

However, in embodiments of this application, a first terminal may obtain a second target resource pool for transmission of an SL PRS. In other words, embodiments of this application provide a method for obtaining a second target resource pool for transmission of an SL PRS, laying a foundation for implementing transmission of the SL PRS.

Optionally, the method further includes:
The first terminal transmits or receives the SL PRS on the second target resource pool.

Optionally, that the first terminal obtains the second target resource pool for transmission of the SL PRS includes:
The first terminal selects, based on configuration information of the SL PRS, the second target resource pool for transmission of the SL PRS.

For example, a higher layer configures related information of the SL PRS (for example, a time domain resource and/or a frequency domain resource of the SL PRS, and activation signaling of SL PRS) for the first terminal, and then the first terminal needs to select a second target resource pool for transmission of the SL PRS.

Optionally, the second target resource pool is a dedicated SL PRS resource pool, or an SL MR or SL PSSCH resource and an SL PRS resource in the second target resource pool are subjected to time division multiplexing or time-frequency resource multiplexing, or a useable resource for an SL MR or an SL PSSCH and a useable resource for the SL PRS in the second target resource pool are subjected to time division multiplexing or time-frequency resource multiplexing.

For example, the SL PRS and the SL PSSCH or the SL MR are reused in the same slot, have some or all symbols that may overlap, and may be subjected to frequency division multiplexing (Frequency Division Multiplexing, FDM) in frequency domain.

Optionally, the time division multiplexing is slot level time division multiplexing, or mini-slot level time division multiplexing, or symbol level time division multiplexing, or subframe level time division multiplexing, or millisecond level time division multiplexing.

The time division multiplexing may also be time division multiplexing of one or more time units (such as slots, mini-slots, symbols, subframes, and milliseconds). For example: time division multiplexing in units of 5 slots is time division multiplexing of a plurality of slots.

According to a fourth aspect, as shown in FIG. 12, FIG. 12 is a flowchart of a positioning reference signal transmission method according to an embodiment of this application. The method may include the following step 1201 to step 1202:
Step 1201: A communication device obtains a second target resource pool for transmission of a sidelink positioning reference signal SL PRS.
Step 1202: The communication device configures or indicates the second target resource pool to a first terminal.

The communication device is a network side device or a second terminal or a scheduling terminal, and the second terminal is a terminal that transmits or receives information to or from the first terminal.

It may be learned that the second target resource pool may be selected by a second terminal (that is, a terminal that transmits or receives information to or from the first terminal), or may be selected by a scheduling terminal (that is, another terminal other than the second terminal and the first terminal), or may be selected by a network side device.

The second target resource pool may be configured for the first terminal to transmit or receive the SL PRS, or may be configured for the second terminal to transmit or receive the SL PRS.

Optionally, a method for obtaining the second target resource for transmission of the SL PRS by the communication device may be the same as the method for selecting the second target resource pool by the first terminal described in the foregoing first aspect. Reference may be made to the foregoing descriptions, and details are not described herein again.

The information transmission method provided in embodiments of this application may be performed by an information transmission apparatus. In embodiments of this application, the information transmission apparatus provided in embodiments of this application is described by using an example in which the information transmission apparatus performs the information transmission method.

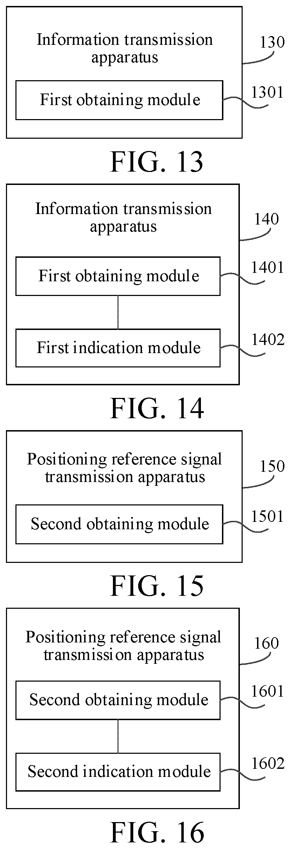

According to a fifth aspect, as shown in FIG. 13, an embodiment of this application provides an information transmission apparatus, applied to a first terminal. The information transmission apparatus 130 includes:
a first obtaining module 1301, configured to obtain a first target resource pool and/or a first target resource for transmission of a sidelink measurement report SL MR or a physical sidelink shared channel SL PSSCH.

Optionally, the apparatus further includes:
a first transmission module, configured to transmit or receive the SL MR or the SL PSSCH on the first target resource;
   and/or
a third indication module, configured to configure or indicate the first target resource to a second terminal, where the second terminal is a terminal that transmits or receives information to or from the first terminal.

Optionally, the first obtaining module obtains the first target resource pool for transmission of the SL MR or the SL PSSCH, specifically configured to:
select, based on first information, the first target resource pool for transmission of the SL MR or the SL PSSCH, where
the first information includes at least one of the following:
   enable information of the SL MR or the SL PSSCH;
   sidelink SL positioning enable information;
   a logical channel ID of the SL MR or the SL PSSCH;
   configuration of a PSFCH;
   quality of service QoS.

Optionally, the first obtaining module obtains the first target resource pool for transmission of the SL MR or the SL PSSCH, specifically configured to:
in a case that enable information of the SL MR or the SL PSSCH indicates that the SL MR or the SL PSSCH is enabled, or in a case that SL positioning enable information indicates that SL positioning is enabled, perform at least one of the following:
selecting, as the first target resource pool, a resource pool in resource pools that is configured with an SL MR or SL PSSCH resource; and
selecting, as the first target resource pool, a resource pool where a sidelink positioning reference signal SL PRS is located.

Optionally, the first obtaining module obtains the first target resource pool for transmission of the SL MR or the SL PSSCH, specifically configured to:
in a case that enable information of the SL MR or the SL PSSCH indicates that the SL MR or the SL PSSCH is disabled, or in a case that SL positioning enable information indicates that SL positioning is disabled, perform at least one of the following:
randomly selecting a resource pool as the first target resource pool;
selecting, as the first target resource pool, a resource pool not configured with the SL MR or the SL PSSCH;
selecting, as the first target resource pool, a resource pool not configured with the SL PRS; and
selecting, as the first target resource pool, a resource pool not configured with an SL discovery.

Optionally, the first target resource pool includes at least one of the following:
a dedicated SL MR resource pool;
a dedicated SL PSSCH and physical sidelink control channel SL PSCCH resource pool;
a dedicated SL PSSCH resource pool;
a resource pool not for the SL PRS;
a resource pool except a dedicated SL PRS resource pool;
a resource pool not for SL discovery; and
a resource pool except a dedicated SL discovery resource pool.

Optionally, the SL MR or SL PSSCH resource in the first target resource pool and an SL PRS resource are subjected to time division multiplexing, or a useable resource for the SL MR or the SL PSSCH in the first target resource pool and a useable resource for the SL PRS are subjected to time division multiplexing.

Optionally, the time division multiplexing is slot level time division multiplexing, or mini-slot level time division multiplexing, or symbol level time division multiplexing, or subframe level time division multiplexing, or millisecond level time division multiplexing.

Optionally, the obtaining module obtains the first target resource pool for transmission of the SL MR or the SL PSSCH, specifically configured to:
select the first target resource pool for transmission of the SL MR or the SL PSSCH in a case that a first condition is satisfied, where
the first condition includes at least one of the following:
   the first terminal receives SL MR or SL PSSCH request information;
   the first terminal receives or measures an SL PRS signal;
   SL MR or SL PSSCH data exists in a cache of the first terminal;
   the first terminal supports transmission on a plurality of resource pools; and
   the first terminal supports transmission on a plurality of carrier waves.

Optionally, the first obtaining module obtains the first target resource for transmission of the SL MR or the SL PSSCH, specifically configured to perform at least one of the following:
selecting the first target resource for transmission of the SL MR or the SL PSSCH based on an SL PRS resource and a first correspondence, where the first correspondence is a correspondence between the SL PRS and the SL MR or SL PSSCH resource;
selecting, as the first target resource, a resource in a different time domain from the SL PRS resource, or a resource that does not overlap with the SL PRS resource; and
selecting the first target resource for transmission of the SL MR or the SL PSSCH from a second candidate resource set based on a first target intersection or a detection result on a first candidate resource set, where the first target intersection is an intersection of the first candidate resource set and the second candidate resource set.

The first correspondence is related to at least one of the following:
information about the SL PRS;
information carried by sidelink control information SCI;
information about the SL MR;
an information type of the SL MR or the SL PSSCH; and
a positioning method.

Optionally, the information about the SL PRS or the information carried by the SCI or the information about the SL MR includes at least one of the following:
a time domain resource of the SL PRS;
a frequency domain resource of the SL PRS;
a resource location of the SL PRS;
an SL PRS resource element offset;
an SL PRS resource block offset;
an SL PRS index;
an SL PRS sequence;
an SL PRS scrambling identifier;
an SL PRS source identifier;
an SL PRS destination identifier;
an SL MR source identifier; and
an SL MR destination identifier.

Optionally, the information type of the SL MR or SL PSSCH includes at least one of the following:
a reference signal time difference RSTD, a relative time of arrival RTOA, an angle of arrival AoA, an angle of departure AoD, a reception-transmission time difference, a reference signal receiving power RSRP, reference signal receiving quality RSRQ, and a received signal strength indicator RSSI.

Optionally, the positioning method includes at least one of the following:
a round trip time RTT positioning method, a multi-round trip time multi-RTT positioning method, a sidelink reference signal time difference SL-RSTD positioning method, a sidelink angle of arrival SL-AoA positioning method, a sidelink angle of departure SL-AoD positioning method, and a sidelink relative time of arrival SL-RTOA positioning method.

Optionally, a corresponding interval between the SL PRS and the SL MR or the SL PSSCH in the first correspondence satisfies at least one of the following:
greater than or not less than a first interval; and
less than or not greater than a second interval, where
the first interval and/or the second interval is a parameter value predefined or pre-configured or configured or indicated by a protocol.

Optionally, the first candidate resource set includes at least one of the following:
a resource configured or indicated as the SL MR or the SL PSSCH;
a resource not configured or indicated as the SL PRS;
a resource not configured or indicated as an SL discovery;
a resource in the first target resource pool that is greater than or not less than n-T0, where n-T0 represents a time value;
one or more resources; and
one or more resource sets.

Optionally, the second candidate resource set includes at least one of the following:
a candidate resource set for the SL MR or the SL PSSCH;
a candidate resource set for a non-SL PRS;
a candidate resource set for sidelink positioning; and
a set of resources that satisfy a packet delay budget PDB.

Optionally, the first obtaining module selects the first target resource for transmission of the SL MR or the SL PSSCH from the second candidate resource set based on the first target intersection or the detection result on the first candidate resource set, specifically configured to:
exclude a second resource in the second candidate resource set based on the first target intersection or the detection result on the first candidate resource set, to obtain a third candidate resource set; and
select the first target resource for transmission of the SL MR or the SL PSSCH based on the third candidate resource set.

Optionally, the second resource is a resource that satisfies a second condition, and the second condition includes at least one of the following:
a resource of the SL MR indicated or reserved for SCI;
a resource of the SL PSSCH indicated or reserved for the SCI;
a resource of the SL PRS indicated or reserved for the SCI;
an RSRP being greater than a first threshold; and
an RSSI being greater than a second threshold.

Optionally, the first obtaining module selects the first target resource for transmission of the SL MR or the SL PSSCH based on the third candidate resource set, specifically configured to perform at least one of the following:
selecting, as the first target resource by the first terminal, a resource that satisfies a third condition from the third candidate resource set;
selecting, based on the third candidate resource set and/or the second candidate resource set, a resource set reported to a higher layer; and
controlling the higher layer of the first terminal to select the first target resource based on the third candidate resource set and/or the second candidate resource set.

Optionally, the third condition includes at least one of the following:
a resource in a candidate resource set for SL positioning;
a resource in a candidate resource set for the SL MR or the SL PSSCH;
a resource in a candidate resource set for a non-SL PRS;
a resource for the non-SL PRS;
a resource in a candidate resource set for a non-SL discovery; and
a resource for the non-SL discovery.

Optionally, the first obtaining module selects, based on the third candidate resource set and/or the second candidate resource set, the resource set reported to the higher layer, specifically configured to perform at least one of the following:
randomly selecting a resource set reported to the higher layer from the third candidate resource set and/or the second candidate resource set;
selecting a second target intersection as the resource set reported to the higher layer, where the second target intersection is an intersection of the third candidate resource set and the second candidate resource set;
selecting the resource set reported to the higher layer from the second target intersection and the third candidate resource set;
selecting the resource set reported to the higher layer from the second target intersection and the second candidate resource set; and
selecting the resource set reported to the higher layer from the second target intersection, the third candidate resource set, and/or the second candidate resource set in a case that a quantity of resources in the second target intersection is less than a quantity of the first target resources.

Optionally, the first obtaining module controls the higher layer of the first terminal to select, based on the third candidate resource set and/or the second candidate resource set, the first target resource for transmission of the SL MR or the SL PSSCH, specifically configured to perform at least one of the following:
controlling the higher layer of the first terminal to randomly select the first target resource from the third candidate resource set and/or the second candidate resource set;
controlling the higher layer of the first terminal to select the first target resource from the second target intersection in a case that a quantity of resources in the second target intersection is greater than or equal to a quantity of the first target resources;
controlling the first terminal to select the first target resource from the second target intersection and the third candidate resource;
controlling the first terminal to select the first target resource from the second target intersection and the second candidate resource set; and
controlling the higher layer of the first terminal to select the first target resources from the second target intersection, the third candidate resource set, and/or the second candidate resource set in a case that the quantity of resources in the second target intersection is less than the quantity of the first target resources.

Optionally, the first obtaining module obtains the first target resource for transmission of the SL MR or the SL PSSCH, specifically configured to:
transmit or receive a scheduling request SR and/or a buffer status report BSR to obtain the first target resource, where
the scheduling request and/or the buffer status report are configured to request to transmit or receive SL MR or SL PSSCH or SL positioning information or non-SL PRS positioning information.

Optionally, in a case that a fourth condition is satisfied, the transmission of the SR is canceled, where
the fourth condition includes at least one of the following:
transmission of the SL MR or the SL PSSCH is canceled; and
a delay requirement for the SL MR or the SL PSSCH is not satisfied.

Optionally, the transmission of the SL MR or the SL PSSCH is mapped to configuration of one or more SRs, where
the configuration of each SR corresponds to at least one of a load, a priority, a delay, and a report information type of one SL MR or SL PSSCH.

Optionally, the BSR carries load information related to the transmission of the SL MR or the SL PSSCH.

Optionally, the first target resource is a periodic or semi-persistent or non-periodic resource.

Optionally, a period value or a starting time of the periodic resource is a value configured by radio resource control RRC signaling.

Optionally, the period value of the semi-persistent resource is a value configured or indicated by a network side device or a predefined terminal or a second terminal, and the second terminal is a terminal that transmits or receives information to or from the first terminal;
and/or
activation or deactivation signaling of the semi-persistent resource is one of media access control control element MAC CE, downlink control information DCI, and SCI.

Optionally, the first transmission module transmits or receives the SL MR or the SL PSSCH on the first target resource, specifically configured to:
transmit or receive the SL MR or the SL PSSCH on the first target resource and on the SCI or the MAC CE or PC5-RRC;
   and/or
transmit or receive the SL MR or the SL PSSCH on the first target resource and on uplink control information UCI or the MAC CE or RRC or a long term evolution positioning protocol LPP.

The information transmission apparatus in embodiments of this application may be an electronic device, for example, an electronic device having an operating system, or may be a component in the electronic device, for example, an integrated circuit or a chip. The electronic device may be a terminal. For example, the terminal may include but is not limited to the above listed type of the terminal 11.

The information transmission apparatus provided in embodiments of this application can implement each process implemented in the method embodiment of FIG. 7, and achieve the same technical effect. To avoid repetition, details are not described herein again.

According to a sixth aspect, as shown in FIG. 14, an embodiment of this application provides an information transmission apparatus. The information transmission apparatus 140 includes:
a first obtaining module 1401, configured to obtain a first target resource for transmission of a sidelink measurement report SL MR or a physical sidelink shared channel SL PSSCH; and
a first indication module 1402, configured to configure or indicate the first target resource to a first terminal.

The information transmission apparatus in embodiments of this application may be an electronic device, for example, an electronic device having an operating system, or may be a component in the electronic device, for example, an integrated circuit or a chip. The electronic device may be a terminal, or may be another device other than the terminal. For example, the terminal may include but is not limited to the above listed types of the terminal 11, and the another device may be a server, a network attached storage (Network Attached Storage, NAS), or the like. This is not specifically limited in embodiments of this application.

The information transmission apparatus provided in embodiments of this application can implement each process implemented in the method embodiment of FIG. 8, and achieve the same technical effect. To avoid repetition, details are not described herein again.

The positioning reference signal transmission method provided in embodiments of this application may be performed by a positioning reference signal transmission apparatus. In embodiments of this application, the positioning reference signal transmission apparatus provided in embodiments of this application is described by using an example in which the positioning reference signal transmission apparatus performs the positioning reference signal transmission method.

According to a seventh aspect, as shown in FIG. 15, an embodiment of this application provides a positioning reference signal transmission apparatus. The positioning reference signal transmission apparatus 150 includes:
a second obtaining module 1501, configured to obtain a second target resource pool for transmission of a sidelink positioning reference signal SL PRS.

Optionally, the second obtaining module obtains the second target resource pool for transmission of the SL PRS, specifically configured to:
select, based on configuration information of the SL PRS, the second target resource pool for transmission of the SL PRS.

Optionally, the apparatus further includes:
a second transmission module, configured to transmit or receive the SL PRS on the second target resource pool.

Optionally, the second target resource pool is a dedicated SL PRS resource pool, or an SL MR or SL PSSCH resource and an SL PRS resource in the second target resource pool are subjected to time division multiplexing or time-frequency resource multiplexing, or a useable resource for an SL MR or an SL PSSCH and a useable resource for the SL PRS in the second target resource pool are subjected to time division multiplexing or time-frequency resource multiplexing.

Optionally, the time division multiplexing is slot level time division multiplexing, or mini-slot level time division multiplexing, or symbol level time division multiplexing, or subframe level time division multiplexing, or millisecond level time division multiplexing.

The positioning reference signal transmission apparatus in embodiments of this application may be an electronic device, for example, an electronic device having an operating system, or may be a component in the electronic device, for example, an integrated circuit or a chip. The electronic device may be a terminal. For example, the terminal may include but is not limited to the above listed type of the terminal 11.

The positioning reference signal transmission apparatus provided in embodiments of this application can implement each process implemented in the method embodiment of FIG. 11, and achieve the same technical effect. To avoid repetition, details are not described herein again.

According to an eight aspect, as shown in FIG. 16, an embodiment of this application provides a positioning reference signal transmission apparatus. The positioning reference signal transmission apparatus 160 includes:
a second obtaining module 1601, configured to obtain a second target resource pool and/or a second target resource for transmission of a sidelink positioning reference signal SL PRS; and
a second indication module 1602, configured to configure or indicate the second target resource to a first terminal

The positioning reference signal transmission apparatus in embodiments of this application may be an electronic device, for example, an electronic device having an operating system, or may be a component in the electronic device, for example, an integrated circuit or a chip. The electronic device may be a terminal, or may be another device other than the terminal. For example, the terminal may include but is not limited to the above listed types of the terminal 11, and the another device may be a server, a network attached storage (Network Attached Storage, NAS), or the like. This is not specifically limited in embodiments of this application.

The positioning reference signal transmission apparatus provided in embodiments of this application can implement each process implemented in the method embodiment of FIG. 12, and achieve the same technical effect. To avoid repetition, details are not described herein again.

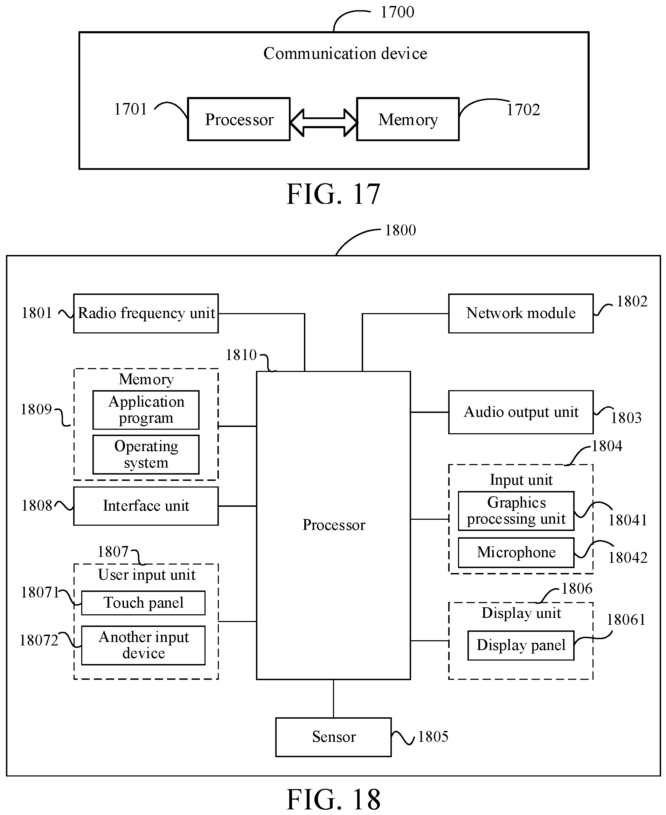

Optionally, as shown in FIG. 17, an embodiment of this application further provides a communication device 1700. The communication device includes a processor 1701 and a memory 1702. The memory 1702 stores a program or an instruction executable in the processor 1701.

For example, when the communication device 1700 is a terminal, the program or the instruction, when executed by the processor 1701, implements each step of the information transmission method embodiment described in the foregoing first aspect or second aspect, and can achieve the same technical effect. When the communication device 1700 is a network side device, the program or the instruction, when executed by the processor 1701, implements each step of the information transmission method embodiment described in the foregoing second aspect, and can achieve the same technical effect. To avoid repetition, details are not described herein again.

Alternatively,
for example, when the communication device 1700 is a terminal, the program or the instruction, when executed by the processor 1701, implements each step of the positioning reference signal transmission method embodiment described in the foregoing third aspect or fourth aspect, and can achieve the same technical effect. When the communication device 1700 is a network side device, the program or the instruction, when executed by the processor 1701, implements each step of the positioning reference signal transmission method embodiment described in the foregoing fourth aspect, and can achieve the same technical effect. To avoid repetition, details are not described herein again.

An embodiment of this application further provides a terminal. As shown in FIG. 18, FIG. 18 is a schematic diagram of a hardware structure of a terminal for implementing an embodiment of this application.

The terminal 1800 includes but is not limited to: at least some of components such as a radio frequency unit 1801, a network module 1802, an audio output unit 1803, an input unit 1804, a sensor 1805, a display unit 1806, a user input unit 1807, an interface unit 1808, a memory 1809, and a processor 1810.

A person skilled in the art may understand that the terminal 1800 may further include a power supply (such as a battery) that supplies power to components. The power supply may be logically connected to the processor 1810 through a power management system, thereby implementing functions such as management of charging, discharging, and power consumption through the power management system. The terminal structure shown in FIG. 18 constitutes no limitation on the terminal, and the terminal may include more or fewer components than those shown in the figure, or some merged components, or different component arrangements. Details are not described herein.

It should be noted that, in this embodiment of this application, the input unit 1804 may include a graphics processing unit (Graphics Processing Unit, GPU) 18041 and a microphone 18042. The graphics processing unit 18041 processes image data of a static picture or a video obtained by an image capturing apparatus (for example, a camera) in a video capturing mode or an image capturing mode. The display unit 1806 may include a display panel 18061. The display panel 18061 may be configured in a form such as a liquid crystal display or an organic light-emitting diode. The user input unit 1807 includes at least one of a touch panel 18071 and another input device 18072. The touch panel 18071 is also referred to as a touch screen. The touch panel 18071 may include a touch detection apparatus and a touch controller. The another input device 18072 may include but is not limited to a physical keyboard, a function button (such as a volume control button or a power button), a trackball, a mouse, and a joystick. Details are not described herein.

In this embodiment of this application, the radio frequency unit 1801 receives downlink data from a network side device, and then may transmit the data to the processor 1810 for processing. In addition, the radio frequency unit 1801 may send uplink data to the network side device. Generally, the radio frequency unit 1801 includes but is not limited to an antenna, an amplifier, a transceiver, a coupler, a low noise amplifier, a duplexer, and the like.

The memory 1809 may be configured to store a software program or instructions and various data. The memory 1809 may include mainly a first storage area for storing a program or instructions and a second storage area for storing data. The first storage area may store an operating system, an application or an instruction required for at least one function (such as a sound playback function and an image playback function), and the like. In addition, the memory 1809 may include a volatile memory or a non-volatile memory, or the memory 1809 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1809 in this embodiment of this application includes but is not limited to the above and any other suitable types of memories.

The processor 1810 may include one or more processing units. Optionally, an application processor and a modem processor may be integrated into the processor 1810. The application processor mainly processes an operating system, a user interface, an application, and the like. The modem processor mainly processes wireless communication signals, for example, may be baseband processor. It may be understood that the foregoing modem processor may alternatively not be integrated into the processor 1810.

According to a first aspect, when the terminal 1800 is used as a first terminal, the processor 1810 is configured to obtain a first target resource pool and/or a first target resource for transmission of a sidelink measurement report SL MR or a physical sidelink shared channel SL PSSCH.

Optionally, the processing unit 1801 is further configured to:
transmit or receive the SL MR or the SL PSSCH on the first target resource;
   and/or
configure or indicate the first target resource to a second terminal, where the second terminal is a terminal that transmits or receives information to or from the first terminal.

Optionally, the processor 1810 obtains the first target resource pool for transmission of the SL MR or the SL PSSCH, specifically configured to:
select, based on first information, the first target resource pool for transmission of the SL MR or the SL PSSCH, where
the first information includes at least one of the following:
   enable information of the SL MR or the SL PSSCH;
   sidelink SL positioning enable information;
   a logical channel ID of the SL MR or the SL PSSCH;
   configuration of a PSFCH; and
   quality of service QoS.

Optionally, the processor 1810 obtains the first target resource pool for transmission of the SL MR or the SL PSSCH, specifically configured to:
in a case that enable information of the SL MR or the SL PSSCH indicates that the SL MR or the SL PSSCH is enabled, or in a case that SL positioning enable information indicates that SL positioning is enabled, perform at least one of the following:
selecting, as the first target resource pool, a resource pool in resource pools that is configured with an SL MR or SL PSSCH resource; and
selecting, as the first target resource pool, a resource pool where a sidelink positioning reference signal SL PRS is located.

Optionally, the processor 1810 obtains the first target resource pool for transmission of the SL MR or the SL PSSCH, specifically configured to:
in a case that enable information of the SL MR or the SL PSSCH indicates that the SL MR or the SL PSSCH is disabled, or in a case that SL positioning enable information indicates that SL positioning is disabled, perform at least one of the following:
randomly selecting a resource pool as the first target resource pool;
selecting, as the first target resource pool, a resource pool not configured with the SL MR or the SL PSSCH;
selecting, as the first target resource pool, a resource pool not configured with the SL PRS; and
selecting, as the first target resource pool, a resource pool not configured with an SL discovery.

Optionally, the first target resource pool includes at least one of the following:
a dedicated SL MR resource pool;
a dedicated SL PSSCH and physical sidelink control channel SL PSCCH resource pool;
a dedicated SL PSSCH resource pool;
a resource pool not for the SL PRS;
a resource pool except a dedicated SL PRS resource pool;
a resource pool not for SL discovery; and
a resource pool except a dedicated SL discovery resource pool.

Optionally, the SL MR or SL PSSCH resource in the first target resource pool and an SL PRS resource are subjected to time division multiplexing, or a useable resource for the SL MR or the SL PSSCH in the first target resource pool and a useable resource for the SL PRS are subjected to time division multiplexing.

Optionally, the time division multiplexing is slot level time division multiplexing, or mini-slot level time division multiplexing, or symbol level time division multiplexing, or subframe level time division multiplexing, or millisecond level time division multiplexing.

Optionally, the processor 1810 obtains the first target resource pool for transmission of the SL MR or the SL PSSCH, specifically configured to:
select the first target resource pool for transmission of the SL MR or the SL PSSCH in a case that a first condition is satisfied, where
the first condition includes at least one of the following:
   the first terminal receives SL MR or SL PSSCH request information;
   the first terminal receives or measures an SL PRS signal;
   SL MR or SL PSSCH data exists in a cache of the first terminal;
   the first terminal supports transmission on a plurality of resource pools; and
   the first terminal supports transmission on a plurality of carrier waves.

Optionally, the processor 1810 obtains the first target resource for transmission of the SL MR or the SL PSSCH, specifically configured to perform at least one of the following:
selecting the first target resource for transmission of the SL MR or the SL PSSCH based on an SL PRS resource and a first correspondence, where the first correspondence is a correspondence between the SL PRS and the SL MR or SL PSSCH resource;
selecting, as the first target resource, a resource in a different time domain from the SL PRS resource, or a resource that does not overlap with the SL PRS resource; and
selecting the first target resource for transmission of the SL MR or the SL PSSCH from a second candidate resource set based on a first target intersection or a detection result on a first candidate resource set, where the first target intersection is an intersection of the first candidate resource set and the second candidate resource set.

The first correspondence is related to at least one of the following:
information about the SL PRS;
information carried by sidelink control information SCI;
information about the SL MR;
an information type of the SL MR or the SL PSSCH; and
a positioning method.

Optionally, the information about the SL PRS or the information carried by the SCI or the information about the SL MR includes at least one of the following:
a time domain resource of the SL PRS;
a frequency domain resource of the SL PRS;
a resource location of the SL PRS;
an SL PRS resource element offset;
an SL PRS resource block offset;
an SL PRS index;
an SL PRS sequence;
an SL PRS scrambling identifier;
an SL PRS source identifier;
an SL PRS destination identifier;
an SL MR source identifier; and
an SL MR destination identifier.

Optionally, the information type of the SL MR or SL PSSCH includes at least one of the following:
a reference signal time difference RSTD, a relative time of arrival RTOA, an angle of arrival AoA, an angle of departure AoD, a reception-transmission time difference, a reference signal receiving power RSRP, reference signal receiving quality RSRQ, and a received signal strength indicator RSSI.

Optionally, the positioning method includes at least one of the following:
a round trip time RTT positioning method, a multi-round trip time multi-RTT positioning method, a sidelink reference signal time difference SL-RSTD positioning method, a sidelink angle of arrival SL-AoA positioning method, a sidelink angle of departure SL-AoD positioning method, and a sidelink relative time of arrival SL-RTOA positioning method.

Optionally, a corresponding interval between the SL PRS and the SL MR or the SL PSSCH in the first correspondence satisfies at least one of the following:
greater than or not less than a first interval; and
less than or not greater than a second interval, where
the first interval and/or the second interval is a parameter value predefined or preconfigured or configured or indicated by a protocol.

Optionally, the first candidate resource set includes at least one of the following:
a resource configured or indicated as the SL MR or the SL PSSCH;
a resource not configured or indicated as the SL PRS;
a resource not configured or indicated as an SL discovery;
a resource in the first target resource pool that is greater than or not less than n-T0, where n-T0 represents a time value;
one or more resources; and
one or more resource sets.

Optionally, the second candidate resource set includes at least one of the following:
a candidate resource set for the SL MR or the SL PSSCH;
a candidate resource set for a non-SL PRS;
a candidate resource set for sidelink positioning; and
a set of resources that satisfy a packet delay budget PDB.

Optionally, the processor 1810 selects the first target resource for transmission of the SL MR or the SL PSSCH from the second candidate resource set based on the first target intersection or the detection result on the first candidate resource set, specifically configured to:
exclude a second resource in the second candidate resource set based on the first target intersection or the detection result on the first candidate resource set, to obtain a third candidate resource set; and
select the first target resource for transmission of the SL MR or the SL PSSCH based on the third candidate resource set.

Optionally, the second resource is a resource that satisfies a second condition, and the second condition includes at least one of the following:
a resource of the SL MR indicated or reserved for SCI;
a resource of the SL PSSCH indicated or reserved for SCI;
a resource of the SL PRS indicated or reserved for SCI;
an RSRP being greater than a first threshold; and
an RSSI being greater than a second threshold.

Optionally, the processor 1810 selects the first target resource for transmission of the SL MR or the SL PSSCH based on the third candidate resource set, specifically configured to perform at least one of the following:
selecting, as the first target resource by the first terminal, a resource that satisfies a third condition from the third candidate resource set;
selecting, based on the third candidate resource set and/or the second candidate resource set, a resource set reported to a higher layer; and
controlling the higher layer of the first terminal to select the first target resource based on the third candidate resource set and/or the second candidate resource set.

Optionally, the third condition includes at least one of the following:
a resource in a candidate resource set for SL positioning;
a resource in a candidate resource set for the SL MR or the SL PSSCH;
a resource in a candidate resource set for a non-SL PRS;
a resource for the non-SL PRS;
a resource in a candidate resource set for a non-SL discovery; and
a resource for the non-SL discovery.

Optionally, the processor 1810 selects, based on the third candidate resource set and/or the second candidate resource set, the resource set reported to the higher layer, specifically configured to perform at least one of the following:
randomly selecting a resource set reported to the higher layer from the third candidate resource set and/or the second candidate resource set;
selecting a second target intersection as the resource set reported to the higher layer, where the second target intersection is an intersection of the third candidate resource set and the second candidate resource set;
selecting the resource set reported to the higher layer from the second target intersection and the third candidate resource set;
selecting the resource set reported to the higher layer from the second target intersection and the second candidate resource set; and
selecting the resource set reported to the higher layer from the second target intersection, the third candidate resource set, and/or the second candidate resource set in a case that a quantity of resources in the second target intersection is less than a quantity of the first target resources.

Optionally, the processor 1810 controls the higher layer of the first terminal to select, based on the third candidate resource set and/or the second candidate resource set, the first target resource for transmission of the SL MR or the SL PSSCH, specifically configured to perform at least one of the following:
controlling the higher layer of the first terminal to randomly select the first target resource from the third candidate resource set and/or the second candidate resource set;
controlling the higher layer of the first terminal to select the first target resource from the second target intersection in a case that a quantity of resources in the second target intersection is greater than or equal to a quantity of the first target resources;
controlling the first terminal to select the first target resource from the second target intersection and the third candidate resource;
controlling the first terminal to select the first target resource from the second target intersection and the second candidate resource set; and
controlling the higher layer of the first terminal to select the first target resources from the second target intersection, the third candidate resource set, and/or the second candidate resource set in a case that the quantity of resources in the second target intersection is less than the quantity of the first target resources.

Optionally, the processor 1810 obtains the first target resource for transmission of the SL MR or the SL PSSCH, specifically configured to:
transmit or receive a scheduling request SR and/or a buffer status report BSR to obtain the first target resource, where
the scheduling request and/or the buffer status report are configured to request to transmit or receive SL MR or SL PSSCH or SL positioning information or non-SL PRS positioning information.

Optionally, in a case that a fourth condition is satisfied, the transmission of the SR is canceled, where
the fourth condition includes at least one of the following:
transmission of the SL MR or the SL PSSCH is canceled; and
a delay requirement for the SL MR or the SL PSSCH is not satisfied.

Optionally, the transmission of the SL MR or the SL PSSCH is mapped to configuration of one or more SRs, where
the configuration of each SR corresponds to at least one of a load, a priority, a delay, and a report information type of one SL MR or SL PSSCH.

Optionally, the BSR carries load information related to the transmission of the SL MR or the SL PSSCH.

Optionally, the first target resource is a periodic or semi-persistent or non-periodic resource.

Optionally, a period value or a starting time of the periodic resource is a value configured by radio resource control RRC signaling.

Optionally, the period value of the semi-persistent resource is a value configured or indicated by a network side device or a predefined terminal or a second terminal, and the second terminal is a terminal that transmits or receives information to or from the first terminal;
and/or
activation or deactivation signaling of the semi-persistent resource is one of media access control control element MAC CE, downlink control information DCI, and SCI.

Optionally, a radio frequency unit 1801 transmits or receives the SL MR or the SL PSSCH on the first target resource, specifically configured to:
transmit or receive the SL MR or the SL PSSCH on the first target resource and on the SCI or the MAC CE or PC5-RRC;
   and/or
transmit or receive the SL MR or the SL PSSCH on the first target resource and on uplink control information UCI or the MAC CE or RRC or a long term evolution positioning protocol LPP.

According to a second aspect, when the terminal 1800 is used as a second terminal, the processor 1810 is configured to obtain a first target resource for transmission of a sidelink measurement report SL MR or a physical sidelink shared channel SL PSSCH.

The radio frequency unit 1801 is configured to configure or indicate the first target resource to a first terminal.

According to a third aspect, when the terminal 1800 is used as a first terminal, the processor 1810 is further configured to obtain a second target resource pool for transmission of a sidelink positioning reference signal SL PRS.

Optionally, the processor 1810 obtains the second target resource pool for transmission of the SL PRS, specifically configured to:
select, based on configuration information of the SL PRS, the second target resource pool for transmission of the SL PRS.

Optionally, the radio frequency unit 1801 is further configured to transmit or receive the SL PRS on the second target resource pool.

Optionally, the second target resource pool is a dedicated SL PRS resource pool, or an SL MR or SL PSSCH resource and an SL PRS resource in the second target resource pool are subjected to time division multiplexing or time-frequency resource multiplexing, or a useable resource for the SL MR or an SL PSSCH and a useable resource for the SL PRS in the second target resource pool are subjected to time division multiplexing or time-frequency resource multiplexing.

Optionally, the time division multiplexing is slot level time division multiplexing, or mini-slot level time division multiplexing, or symbol level time division multiplexing, or subframe level time division multiplexing, or millisecond level time division multiplexing.

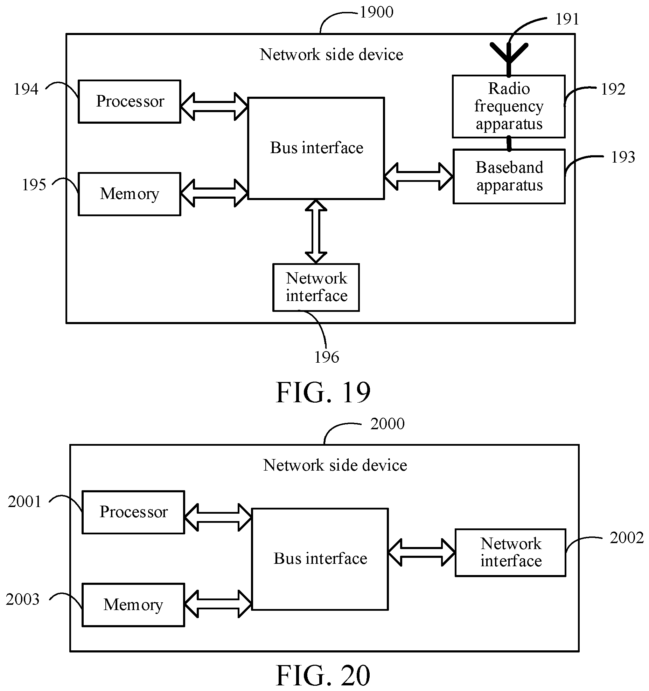

An embodiment of this application further provides a network side device. As shown in FIG. 19, the network side device 1900 includes an antenna 191, a radio frequency apparatus 192, a baseband apparatus 193, a processor 194, and a memory 195. The antenna 191 is connected to the radio frequency apparatus 192. In an uplink direction, the radio frequency apparatus 192 receives information through the antenna 191, and sends the received information to the baseband apparatus 193 for processing. In a downlink direction, the baseband apparatus 193 processes to-be-sent information, and sends the processed to-be-sent information to the radio frequency apparatus 192. The radio frequency apparatus 192 processes the received information, and then sends the processed information through the antenna 191.

The method performed by the network side device in the foregoing embodiment may be implemented by the baseband apparatus 193. The baseband apparatus 193 includes a baseband processor.

The baseband apparatus 193 may include, for example, at least one baseband board. A plurality of chips are arranged on the baseband board, as shown in FIG. 19. One of the chips is, for example, a baseband processor, and is connected to the memory 195 through a bus interface to call a program in the memory 195, to perform the operations of the network device shown in the foregoing method embodiment.

The network side device may further include a network interface 196. The interface is, for example, a common public radio interface (common public radio interface, CPRI).

Specifically, the network side device 1900 in this embodiment of this application further includes an instruction or a program stored in the memory 195 and executable in the processor 194. The processor 194 calls the instruction or the program in the memory 195 to perform the method shown in FIG. 8 or FIG. 12 and achieve the same technical effect. To avoid repetition, details are not described herein.

Specifically, an embodiment of this application further provides a network side device. As shown in FIG. 20, the network side device 2000 includes a processor 2001, a network interface 2002, and a memory 2003. The network interface 2002 is, for example, a common public radio interface (common public radio interface, CPRI).

Specifically, the network side device 2000 in this embodiment of this application further includes an instruction or a program stored in the memory 2003 and executable in the processor 2001. The processor 2001 calls the instruction or the program in the memory 2003 to perform the method shown in FIG. 8 or FIG. 12 and achieve the same technical effect. To avoid repetition, details are not described herein.

An embodiment of this application further provides a readable storage medium. The readable storage medium stores a program or an instruction. The program or the instruction, when executed by a processor, implements each process of the information transmission method embodiment described in the foregoing first aspect or second aspect, or implements each process of the positioning reference signal transmission method embodiment described in the foregoing third aspect or fourth aspect, and can achieve the same technical effect. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or an instruction, to implement each process of the information transmission method embodiment described in the foregoing first aspect or second aspect, or implement each process of the positioning reference signal transmission method embodiment described in the foregoing third aspect or fourth aspect, and can achieve the same technical effect. To avoid repetition, details are not described herein again.

It should be understood that the chip mentioned in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement each process of the information transmission method embodiment described in the foregoing first aspect or second aspect, or implement each process of the positioning reference signal transmission method embodiment described in the foregoing third aspect or fourth aspect, and can achieve the same technical effect. To avoid repetition, details are not described herein again.

An embodiment of this application further provides an information transmission system, including a first terminal and a communication device. The first terminal may be configured to perform the steps of the information transmission method described in the foregoing first aspect, and the communication device may be configured to perform the steps of the information transmission method described in the foregoing second aspect. The communication device is a network side device or a second terminal or a scheduling terminal. The second terminal is a terminal that transmits or receives information to or from the first terminal.

An embodiment of this application further provides a positioning reference signal transmission system, including a first terminal and a communication device. The first terminal may be configured to perform the steps of the positioning reference signal transmission method described in the foregoing third aspect, and the communication device may be configured to perform the steps of the positioning reference signal transmission method described in the foregoing fourth aspect. The communication device is a network side device or a second terminal or a scheduling terminal. The second terminal is a terminal that transmits or receives information to or from the first terminal.

It should be noted that the term "comprise", "include" or any other variant herein are intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of an additional same element in the process, the method, the article, or the apparatus that includes the element. In addition, it should be noted that the scope of the method and the apparatus in embodiments of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the foregoing implementations, a person skilled in the art may clearly learn that the method in the foregoing embodiments may be implemented by software with a necessary universal hardware platform, or may be implemented by hardware. However, in many cases, the software with a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disk), including a plurality of instructions for causing a terminal (which may be a mobile phone, a computer, a server, an air conditioner, a network device, or the like) to perform the method in embodiments of this application.

Although embodiments of this application are described above with reference to the accompanying drawings, this application is not limited to the specific implementations described above. The foregoing specific implementations are illustrative but not restrictive. With the enlightenment of this application, a person of ordinary skill in the art may make many forms without departing from the concept of this application and the protection scope of the claims. These forms fall within the protection of this application.

## Claims

1. An information transmission method, comprising:
obtaining, by a first terminal, a first target resource pool and/or a first target resource for transmission of a sidelink measurement report SL MR or a physical sidelink shared channel SL PSSCH.

2. The method according to claim 1, further comprising:
transmitting or receiving, by the first terminal, the SL MR or the SL PSSCH on the first target resource;
and/or
configuring or indicating, by the first terminal, the first target resource to a second terminal, wherein the second terminal is a terminal that transmits or receives information to or from the first terminal.

3. The method according to claim 1, wherein the obtaining, by a first terminal, a first target resource pool for transmission of a sidelink measurement report SL MR or a physical sidelink shared channel SL PSSCH comprises:
selecting, by the first terminal based on first information, the first target resource pool for transmission of the SL MR or the SL PSSCH, wherein
the first information comprises at least one of the following:
enable information of the SL MR or the SL PSSCH;
sidelink SL positioning enable information;
a logical channel ID of the SL MR or the SL PSSCH;
configuration of a physical sidelink feedback channel PSFCH; and
quality of service QoS.

4. The method according to claim 1, wherein the obtaining, by a first terminal, a first target resource pool for transmission of a sidelink measurement report SL MR or a physical sidelink shared channel SL PSSCH comprises:
performing, by the first terminal in a case that enable information of the SL MR or the SL PSSCH indicates that the SL MR or the SL PSSCH is enabled, or in a case that SL positioning enable information indicates that SL positioning is enabled, at least one of the following:
selecting, as the first target resource pool by the first terminal, a resource pool in resource pools that is configured with an SL MR or SL PSSCH resource; and
selecting, as the first target resource pool by the first terminal, a resource pool where a sidelink positioning reference signal SL PRS is located.

5. The method according to claim 1 or 4, wherein the obtaining, by a first terminal, a first target resource pool for transmission of a sidelink measurement report SL MR or a physical sidelink shared channel SL PSSCH comprises:
performing, by the first terminal in a case that enable information of the SL MR or the SL PSSCH indicates that the SL MR or the SL PSSCH is disabled, or in a case that SL positioning enable information indicates that SL positioning is disabled, at least one of the following:
randomly selecting, by the first terminal, a resource pool as the first target resource pool;
selecting, as the first target resource pool by the first terminal, a resource pool not configured with the SL MR or the SL PSSCH; and
selecting, as the first target resource pool by the first terminal, a resource pool not configured with the SL PRS; and
selecting, as the first target resource pool by the first terminal, a resource pool not configured with an SL discovery.

6. The method according to claim 1, wherein the first target resource pool comprises at least one of the following:
a dedicated SL MR resource pool;
a dedicated SL PSSCH and physical sidelink control channel SL PSCCH resource pool;
a dedicated SL PSSCH resource pool;
a resource pool not for the SL PRS;
a resource pool except a dedicated SL PRS resource pool;
a resource pool not for SL discovery; and
a resource pool except a dedicated SL discovery resource pool.

7. The method according to claim 1, wherein the SL MR or SL PSSCH resource in the first target resource pool and an SL PRS resource are subjected to time division multiplexing, or a useable resource for the SL MR or the SL PSSCH in the first target resource pool and a useable resource for an SL PRS are subjected to time division multiplexing.

8. The method according to claim 7, wherein the time division multiplexing is slot level time division multiplexing, or mini-slot level time division multiplexing, or symbol level time division multiplexing, or subframe level time division multiplexing, or millisecond level time division multiplexing.

9. The method according to claim 1, wherein the obtaining, by a first terminal, a first target resource pool for transmission of a sidelink measurement report SL MR or a physical sidelink shared channel SL PSSCH comprises:
selecting, by the first terminal, the first target resource pool for transmission of the SL MR or the SL PSSCH in a case that a first condition is satisfied, wherein
the first condition comprises at least one of the following:
the first terminal receives SL MR or SL PSSCH request information;
the first terminal receives or measures an SL PRS signal;
SL MR or SL PSSCH data exists in a cache of the first terminal;
the first terminal supports transmission on a plurality of resource pools; and
the first terminal supports transmission on a plurality of carrier waves.

10. The method according to claim 1, wherein the obtaining, by a first terminal, a first target resource for transmission of an SL MR or an SL PSSCH comprises at least one of the following:
selecting, by the first terminal, the first target resource for transmission of the SL MR or the SL PSSCH based on an SL PRS resource and a first correspondence, wherein the first correspondence is a correspondence between the SL PRS and the SL MR or SL PSSCH resource;
selecting, as the first target resource by the first terminal, a resource in a different time domain from the SL PRS resource, or a resource that does not overlap with the SL PRS resource; and
selecting, by the first terminal, the first target resource for transmission of the SL MR or the SL PSSCH from a second candidate resource set based on a first target intersection or a detection result on a first candidate resource set, wherein the first target intersection is an intersection of the first candidate resource set and the second candidate resource set.

11. The method according to claim 10, wherein the first correspondence is related to at least one of the following:
information about the SL PRS;
information carried by sidelink control information SCI;
information about the SL MR;
an information type of the SL MR or the SL PSSCH; and
a positioning method.

12. The method according to claim 11, wherein the information about the SL PRS or the information carried by the SCI or the information about the SL MR comprises at least one of the following:
a time domain resource of the SL PRS;
a frequency domain resource of the SL PRS;
a resource location of the SL PRS;
an SL PRS resource element offset;
an SL PRS resource block offset;
an SL PRS index;
an SL PRS sequence;
an SL PRS scrambling identifier;
an SL PRS source identifier;
an SL PRS destination identifier;
an SL MR source identifier; and
an SL MR destination identifier.

13. The method according to claim 11, wherein the information type of the SL MR or SL PSSCH comprises at least one of the following:
a reference signal time difference RSTD, a relative time of arrival RTOA, an angle of arrival AoA, an angle of departure AoD, a reception-transmission time difference, a reference signal receiving power RSRP, reference signal receiving quality RSRQ, and a received signal strength indicator RSSI.

14. The method according to claim 11, wherein the positioning method comprises at least one of the following:
a round trip time RTT positioning method, a multi-round trip time multi-RTT positioning method, a sidelink reference signal time difference SL-RSTD positioning method, a sidelink angle of arrival SL-AoA positioning method, a sidelink angle of departure SL-AoD positioning method, and a sidelink relative time of arrival SL-RTOA positioning method.

15. The method according to claim 10, wherein a corresponding interval between the SL PRS and the SL MR or the SL PSSCH in the first correspondence satisfies at least one of the following:
greater than or not less than a first interval; and
less than or not greater than a second interval, wherein
the first interval and/or the second interval is a parameter value predefined or preconfigured or configured or indicated by a protocol.

16. The method according to claim 10, wherein the first candidate resource set comprises at least one of the following:
a resource configured or indicated as the SL MR or the SL PSSCH;
a resource not configured or indicated as the SL PRS;
a resource not configured or indicated as an SL discovery;
a resource in the first target resource pool that is greater than or not less than n-T0, wherein n-T0 represents a time value;
one or more resources; and
one or more resource sets.

17. The method according to claim 10, wherein the second candidate resource set comprises at least one of the following:
a candidate resource set for the SL MR or the SL PSSCH;
a candidate resource set for a non-SL PRS;
a candidate resource set for sidelink positioning; and
a set of resources that satisfy a packet delay budget PDB.

18. The method according to claim 10, wherein the selecting, by the first terminal, the first target resource for transmission of the SL MR or the SL PSSCH from a second candidate resource set based on a first target intersection or a detection result on a first candidate resource set comprises:
excluding, by the first terminal, a second resource in the second candidate resource set based on the first target intersection or the detection result on the first candidate resource set, to obtain a third candidate resource set; and
selecting, by the first terminal, the first target resource for transmission of the SL MR or the SL PSSCH based on the third candidate resource set.

19. The method according to claim 18, wherein the second resource is a resource that satisfies a second condition, and the second condition comprises at least one of the following:
a resource of the SL MR indicated or reserved for SCI;
a resource of the SL PSSCH indicated or reserved for the SCI;
a resource of the SL PRS indicated or reserved for the SCI;
an RSRP being greater than a first threshold; and
an RSSI being greater than a second threshold.

20. The method according to claim 18, wherein the selecting, by the first terminal, the first target resource for transmission of the SL MR or the SL PSSCH based on the third candidate resource set comprises at least one of the following:
selecting, as the first target resource by the first terminal, a resource that satisfies a third condition from the third candidate resource set;
selecting, by the first terminal based on the third candidate resource set and/or the second candidate resource set, a resource set reported to a higher layer; and
selecting, by the higher layer of the first terminal, the first target resource based on the third candidate resource set and/or the second candidate resource set.

21. The method according to claim 20, wherein the third condition comprises at least one of the following:
a resource in a candidate resource set for SL positioning;
a resource in a candidate resource set for the SL MR or the SL PSSCH;
a resource in a candidate resource set for a non-SL PRS;
a resource for the non-SL PRS;
a resource in a candidate resource set for a non-SL discovery; and
a resource for the non-SL discovery.

22. The method according to claim 20, wherein the selecting, by the first terminal based on the third candidate resource set and/or the second candidate resource set, a resource set reported to a higher layer comprises at least one of the following:
randomly selecting, by the first terminal, the resource set reported to the higher layer from the third candidate resource set and/or the second candidate resource set;
selecting, by the first terminal, a second target intersection as the resource set reported to the higher layer, wherein the second target intersection is an intersection of the third candidate resource set and the second candidate resource set;
selecting, by the first terminal, the resource set reported to the higher layer from the second target intersection and the third candidate resource set;
selecting, by the first terminal, the resource set reported to the higher layer from the second target intersection and the second candidate resource set; and
selecting, by the first terminal, the resource set reported to the higher layer from the second target intersection, the third candidate resource set, and/or the second candidate resource set in a case that a quantity of resources in the second target intersection is less than a quantity of the first target resources.

23. The method according to claim 20, wherein the selecting, by the higher layer of the first terminal based on the third candidate resource set and/or the second candidate resource set, the first target resource for transmission of the SL MR or the SL PSSCH comprises at least one of the following:
randomly selecting, by the higher layer of the first terminal, the first target resource from the third candidate resource set and/or the second candidate resource set;
selecting, by the higher layer of the first terminal, the first target resource from the second target intersection in a case that a quantity of resources in the second target intersection is greater than or equal to a quantity of the first target resources;
selecting, by the first terminal, the first target resource from the second target intersection and the third candidate resource set;
selecting, by the first terminal, the first target resource from the second target intersection and the second candidate resource set; and
selecting, by the higher layer of the first terminal, the first target resource from the second target intersection, the third candidate resource set, and/or the second candidate resource set in a case that the quantity of resources in the second target intersection is less than the quantity of the first target resources.

24. The method according to claim 1, wherein the obtaining, by a first terminal, a first target resource for transmission of an SL MR or an SL PSSCH comprises:
transmitting or receiving, by the first terminal, a scheduling request SR and/or a buffer status report BSR to obtain the first target resource, wherein
the scheduling request and/or the buffer status report are configured to request to transmit or receive SL MR or SL PSSCH or SL positioning information or non-SL PRS positioning information.

25. The method according to claim 24, wherein in a case that a fourth condition is satisfied, the transmission of the SR is canceled, wherein
the fourth condition comprises at least one of the following:
transmission of the SL MR or the SL PSSCH is canceled; and
a delay requirement for the SL MR or the SL PSSCH is not satisfied.

26. The method according to claim 24, wherein the transmission of the SL MR or the SL PSSCH is mapped to configuration of one or more SRs, wherein
the configuration of each SR corresponds to at least one of a load, a priority, a delay, and a report information type of one SL MR or SL PSSCH.

27. The method according to claim 24, wherein the BSR carries load information related to the transmission of the SL MR or the SL PSSCH.

28. The method according to claim 1, wherein the first target resource is a periodic or semi-persistent or non-periodic resource.

29. The method according to claim 28, wherein a period value or a starting time of the periodic resource is a value configured by radio resource control RRC signaling.

30. The method according to claim 28, wherein the period value of the semi-persistent resource is a value configured or indicated by a network side device or a predefined terminal or a second terminal, and the second terminal is a terminal that transmits or receives information to or from the first terminal;
and/or
activation or deactivation signaling of the semi-persistent resource is one of media access control control element MAC CE, downlink control information DCI, and SCI.

31. The method according to claim 2, wherein the transmitting or receiving, by the first terminal, the SL MR or the SL PSSCH on the first target resource comprises:
transmitting or receiving, by the first terminal, the SL MR or the SL PSSCH on the first target resource and on the SCI or the MAC CE or a PC5-RRC;
and/or
transmitting or receiving, by the first terminal, the SL MR or the SL PSSCH on the first target resource and on uplink control information UCI or the MAC CE or RRC or a long term evolution positioning protocol LPP.

32. A positioning reference signal transmission method, comprising:
obtaining, by a first terminal, a second target resource pool for transmission of a sidelink positioning reference signal SL PRS.

33. The method according to claim 32, wherein the obtaining, by a first terminal, a second target resource pool for transmission of an SL PRS comprises:
selecting, by the first terminal based on configuration information of the SL PRS, the second target resource pool for transmission of the SL PRS.

34. The method according to claim 32, further comprising:
transmitting or receiving, by the first terminal, the SL PRS on the second target resource pool.

35. The method according to claim 32, wherein the second target resource pool is a dedicated SL PRS resource pool, or an SL MR or SL PSSCH resource and an SL PRS resource in the second target resource pool are subjected to time division multiplexing or time-frequency resource multiplexing, or a useable resource for an SL MR or an SL PSSCH and a useable resource for the SL PRS in the second target resource pool are subjected to time division multiplexing or time-frequency resource multiplexing.

36. The method according to claim 35, wherein the time division multiplexing is slot level time division multiplexing, or mini-slot level time division multiplexing, or symbol level time division multiplexing, or subframe level time division multiplexing, or millisecond level time division multiplexing.

37. An information transmission method, comprising:
obtaining, by a communication device, a first target resource pool and/or a first target resource for transmission of a sidelink measurement report SL MR or a physical sidelink shared channel SL PSSCH; and
configuring or indicating, by the communication device, the first target resource pool and/or the first target resource to a first terminal, wherein
the communication device is a network side device or a second terminal or a scheduling terminal, and the second terminal is a terminal that transmits or receives information to or from the first terminal.

38. A positioning reference signal transmission method, comprising:
obtaining, by a communication device, a second target resource pool for transmission of a sidelink positioning reference signal SL PRS; and
configuring or indicating, by the communication device, the second target resource pool to a first terminal, wherein
the communication device is a network side device or a second terminal or a scheduling terminal, and the second terminal is a terminal that transmits or receives information to or from the first terminal.

39. An information transmission apparatus, comprising:
a first obtaining module, configured to obtain a first target resource pool and/or a first target resource for transmission of a sidelink measurement report SL MR or a physical sidelink shared channel SL PSSCH.

40. A positioning reference signal transmission apparatus, comprising:
a second obtaining module, configured to obtain a second target resource pool and/or a second target resource for transmission of a sidelink positioning reference signal SL PRS.

41. An information transmission apparatus, comprising:
a first obtaining module, configured to obtain a first target resource for transmission of a sidelink measurement report SL MR or a physical sidelink shared channel SL PSSCH; and
a first indication module, configured to configure or indicate the first target resource to a first terminal.

42. A positioning reference signal transmission apparatus, comprising:
a second obtaining module, configured to obtain a second target resource pool and/or a second target resource for transmission of a sidelink positioning reference signal SL PRS; and
a second indication module, configured to configure or indicate the second target resource to a first terminal.

43. A terminal, comprising a processor and a memory, wherein the memory is configured to store a program or an instruction executable on the processor, and the program or the instruction, when executed by the processor, implements the steps of the information transmission method according to any one of claims 1 to 31, or implements the steps of the positioning reference signal transmission method according to any one of claims 32 to 36.

44. A communication device, comprising a processor and a memory, wherein the memory is configured to store a program or an instruction executable on the processor, and the program or the instruction, when executed by the processor, implements the steps of the information transmission method according to claim 37, or implements the steps of the positioning reference signal transmission method according to claim 38, wherein the communication device is a network side device or a second terminal or a scheduling terminal, and the second terminal is a terminal that transmits or receives information to or from the first terminal.

45. A readable storage medium, storing a program or an instruction, wherein the program or the instruction, when executed by a processor, implements the steps of the information transmission method according to any one of claims 1 to 31, or implements the steps of the positioning reference signal transmission method according to any one of claims 32 to 36, or implements the steps of the information transmission method according to claim 37, or implements the steps of the positioning reference signal transmission method according to claim 38.
